# EUROPEAN PATENT SPECIFICATION

(11) **EP 4 429 166 B1**
(45) Date of publication and mention of the grant of the patent: **04.11.2026**
(21) Application number: 22900316.5
(22) Date of filing: 22.11.2022
(51) Int. Cl.: G06N 3/08, H04L 9/08, H04L 9/06

(54) **COMMUNICATION METHOD AND APPARATUS, STORAGE MEDIUM, AND PROGRAM PRODUCT**
KOMMUNIKATIONSVERFAHREN UND -VORRICHTUNG, SPEICHERMEDIUM UND PROGRAMMPRODUKT
PROCÉDÉ ET APPAREIL DE COMMUNICATION, SUPPORT DE STOCKAGE ET PRODUIT-PROGRAMME

(30) Priority: 03.12.2021 CN 202111470700
(43) Date of publication of application: 11.09.2024
(73) Proprietor: Huawei Technologies Co., Ltd., Shenzhen, Guangdong 518129 (CN)
(72) Inventor: WANG, Yang, Shenzhen, Guangdong 518129 (CN); YAN, Xueqiang, Shenzhen, Guangdong 518129 (CN); ZHAO, Mingyu, Shenzhen, Guangdong 518129 (CN); WU, Shaoyun, Shenzhen, Guangdong 518129 (CN); XING, Weijun, Shenzhen, Guangdong 518129 (CN)
(74) Representative: Thun, Clemens
(86) International application number: PCT/CN2022/133381
(87) International publication number: WO 2023/098511

(56) References cited:
- WO-A1-2021/174877
- WO-A1-2021/232832
- CN-A- 112 183 767
- CN-A- 113 435 592
- US-B1- 11 017 322
- QIAN CHEN ET AL: "PPT: A Privacy-Preserving Global Model Training Protocol for Federated Learning in P2P Networks", ARXIV.ORG, CORNELL UNIVERSITY LIBRARY, 201 OLIN LIBRARY CORNELL UNIVERSITY ITHACA, NY 14853, 9 August 2021 (2021-08-09), XP091026814
- WANG HUICHAO ET AL: "Private FLI: Anti-Gradient Leakage Recovery Data Privacy Architecture", 2021 INTERNATIONAL JOINT CONFERENCE ON NEURAL NETWORKS (IJCNN), IEEE, 18 July 2021 (2021-07-18), pages 1 - 7, XP033973960, DOI: 10.1109/IJCNN52387.2021.9533501

## Description

### TECHNICAL FIELD

This application relates to the field of communication technologies, and in particular, to a communication method and apparatus, a storage medium, and a program product.

### BACKGROUND

In recent years, artificial intelligence (artificial intelligence, AI) technologies have achieved great success in computer vision, natural language processing, and the like. Conventional AI is mainly centralized learning (for example, cloud AI). To obtain a model with better generalization performance, AI service providers need to obtain a large amount of raw data of users. However, with enhancement of privacy awareness of people and enactment of data security regulations around the world, the centralized learning paradigm is no longer feasible.

Therefore, a federated learning (federated learning, FL) framework is put forward. A main idea of the federated learning framework is that a client does not directly upload raw data to a third-party server, but uploads a gradient or a native model parameter. The server can perform aggregation to obtain a global model and deliver the global model to the client for a new round of training iteration until a training process ends. Although it is ensured that the raw data is not uploaded in federated learning, the server may still infer raw data information of the client (infer an inference attack) because the gradient or the model parameter that is uploaded by the client is a function of the raw data. In particular, the client uploads an overfitted native model at an initial training stage. Therefore, a privacy leakage problem is not fully resolved by using the federated learning framework.
The document Qian Chen et al.: "PPT: A privacy-preserving global model training protocol for federated learning in P2P networks", XP091026814 is a scientific paper on model training preserving privacy.

### SUMMARY

The present invention is defined by the independent claims. Further advantageous developments are shown by the dependent claims.

This application provides a communication method and apparatus, a storage medium, and a program product, to improve security in a neural network training process.

According to a first aspect, a communication method is provided. The method includes: A first terminal receives training information. The training information includes a global model in a previous round and identifiers of at least two second terminals that participate in a current round of training. The first terminal is any one of the at least two second terminals. The first terminal sends a local model of the first terminal. The local model is obtained based on the global model in the previous round and a shared key. The shared key is generated based on a private key of the first terminal and a public key of a third terminal. The third terminal is any one of the at least two second terminals other than the first terminal. In this aspect, local models are scrambled based on a shared key between terminals, so that a server cannot infer initial local models or raw local models of the terminals, thereby improving security in a neural network training process In a possible implementation, before the first terminal sends the local model of the first terminal, the method further includes: The first terminal scrambles an initial local model of the first terminal by using a random vector of the shared key, to obtain the local model of the first terminal. In this implementation, the first terminal scrambles the initial local model of the first terminal by using the random vector of the shared key. After obtaining local models of all terminals that participate in training, the server may eliminate the random vector of the shared key, to obtain the global model. However, the server cannot infer initial local models or raw local models of the terminals, thereby improving the security in the neural network training process.

In another possible implementation, after the first terminal scrambles the initial local model of the first terminal by using the random vector of the shared key, to obtain the local model of the first terminal, and before the first terminal sends the local model of the first terminal, the method further includes: The first terminal performs modulo division on the local model that is of the first terminal and that is obtained through scrambling. In this implementation, a function of modulo division is to prevent an added local model from becoming excessively large and therefore causing storage overflow of a scrambled model in a computer.

In still another possible implementation, the method further includes: The first terminal sends a sub-key set. The sub-key set includes a correspondence between at least two first sub-keys of the shared key and the identifiers of the at least two second terminals, and a correspondence between at least two second sub-keys of a random seed and the identifiers of the at least two second terminals. In this implementation, the shared key is divided into a plurality of first sub-keys, the random seed is divided into a plurality of second sub-keys, and the plurality of first sub-keys and the plurality of second sub-keys are provided to the server and then distributed to a plurality of terminals. In this way, even if the first terminal exits training in the training process, the server can obtain a specific quantity of first sub-keys and/or second sub-keys from other terminals, and can also eliminate the random vector of the shared key and a random vector of the random seed in a local model of the first terminal, to obtain the global model. In addition, security and robustness in the neural network training process are improved.

In still another possible implementation, the method further includes: The first terminal sends a first exit notification before a first timer expires. The first exit notification includes the shared key. In this implementation, before exiting training, the first terminal sends the first exit notification, and actively notifies the server of the shared key, so that the server does not need to obtain the specific quantity of first sub-keys from the other terminals.

In still another possible implementation, the first exit notification further includes an exit reason. In this implementation, the exit reason indicates a reason why the first terminal exits, and includes active exit, power-off, and communication interruption. With reference to the exit reason, the server may consider whether to use the first terminal as a participant in a next round of model training.

In still another possible implementation, the method further includes: The first terminal receives a second exit notification after a second timer expires. The first terminal sends the shared key. In this implementation, alternatively, when the server does not receive the local model of the first terminal after the second timer expires, the server may indicate the first terminal to exit, and the first terminal sends the shared key to the server, so that the server does not need to obtain the specific quantity of first sub-keys from the other terminals.

In still another possible implementation, the training information further includes training time information. The training time information includes at least one of the following information: a timestamp of the server and a time variable function. The method further includes: The first terminal determines a modified first sub-key based on the training time information and the first sub-key of the first terminal. That the first terminal scrambles the local model of the first terminal by using the random vector of the shared key includes that the first terminal scrambles the local model of the first terminal by using a random vector of the modified first sub-key. In this implementation, in each round of model training, a local model is scrambled by using a random vector of a shared key associated with training time information. A shared key and a scrambling item in each round of model training are changed, thereby further improving security in neural network model training.

In still another possible implementation, before the first terminal receives the training information, the method further includes: The first terminal receives a broadcast message. The broadcast message includes at least one of the following information: an identifier of a training task, model structure information, a public key of the server, and at least one prime number.

In still another possible implementation, before the first terminal receives the training information, the method further includes: The first terminal sends a registration request. The registration request includes at least one of the following information: an identifier of the first terminal and a public key of the first terminal. The first terminal receives a registration response.

In still another possible implementation, if the broadcast message does not carry the public key *PKₒ* of the server, the registration response may carry the public key *PKₒ.*

If the broadcast message does not carry a prime number *p*, the registration response may carry the prime number *p*.

If the broadcast message does not carry the identifier of the training task, the registration response may carry the identifier of the training task.

If the broadcast message does not carry the model structure information, the registration response may carry the model structure information.

In addition, if time intervals between all rounds of training are the same, the registration response may further carry the time interval between rounds of training.

In still another possible implementation, after the first terminal receives the registration response, the method further includes: The first terminal sends an obtaining request. The obtaining request includes the identifier of the training task. The first terminal receives a feedback message. The feedback message includes at least one of the following information: the identifier of the training task, the identifiers of the at least two second terminals, and public keys of the at least two second terminals.

In still another possible implementation, before the first terminal receives the training information, the method further includes: The first terminal sends a training participation request.

In still another possible implementation, the training participation request includes at least one of the following information: processor usage of the first terminal and an electricity quantity of the first terminal.

In still another possible implementation, the identifiers of the at least two second terminals that participate in the current round of training include at least one of the following identifiers: identifiers of second terminals that newly participate in the current round of training, and an identifier of a terminal that participates in the previous round of training and that exits the current round of training.

In still another possible implementation, the training information further includes at least one of the following information: the first timer and a quantity of training rounds.

According to a second aspect, a communication method is provided. The method includes: A server sends training information. The training information includes a global model in a previous round and identifiers of at least two second terminals that participate in a current round of training. The server receives local models of the at least two second terminals. The local models are obtained based on the global model in the previous round and a shared key between the at least two second terminals. The server aggregates the local models of the at least two second terminals based on the shared key between the at least two second terminals, to obtain an updated global model in the current round.

In a possible implementation, the local models of the at least two second terminals are obtained by scrambling initial local models of the at least two second terminals by using a random vector of the shared key. That the server aggregates the local models of the at least two second terminals based on the shared key between the at least two second terminals, to obtain the updated global model in the current round includes that the server aggregates the local models of the at least two second terminals, and eliminates the random vector of the shared key between the at least two second terminals, to obtain the global model.

In another possible implementation, the method further includes: The server receives a sub-key set. The sub-key set includes a correspondence between at least two first sub-keys of the shared key and the identifiers of the at least two second terminals, and a correspondence between at least two second sub-keys of a random seed and the identifiers of the at least two second terminals. The server distributes the at least two first sub-keys and the at least two second sub-keys. The local models of the at least two second terminals are obtained by scrambling the initial local models of the at least two second terminals by using random vectors of the at least two first sub-keys and random vectors of the at least two second sub-keys.

In still another possible implementation, the method further includes: The server starts a first timer. The server receives a first exit notification from a first terminal before the first timer expires. The first exit notification includes the shared key. The first terminal is any one of the at least two second terminals.

In still another possible implementation, the first exit notification further includes an exit reason.

In still another possible implementation, the method further includes: The server starts a second timer. Duration of the second timer is greater than duration of the first timer. The server sends a second exit notification after the second timer expires. The server receives the shared key from the first terminal.

In still another possible implementation, the method further includes: The server starts a second timer. If the server receives a local model from a first terminal before the second timer expires, the server sends a first obtaining request to at least one third terminal, and the server receives a first feedback message. The first feedback message includes at least one of the second sub-keys. The first terminal is any one of the at least two second terminals. The at least one third terminal is at least of the at least two second terminals other than the first terminal. Alternatively, if the server receives a local model from a first terminal before the second timer expires, the server sends a second obtaining request to the first terminal, and the server receives a second feedback message. The second feedback message includes the random seed. Alternatively, when the second timer expires, and the server does not receive a local model of a first terminal and does not receive a first sub-key of the first terminal, the server sends a third obtaining request to at least one third terminal, and the server receives a third feedback message. The third obtaining request includes an identifier of the first terminal. The third feedback message includes at least one of the first sub-keys and at least one of the second sub-keys.

In still another possible implementation, the training information further includes training time information. The training time information includes at least one of the following information: a timestamp of the server and a time variable function. The local model of the first terminal is obtained by scrambling an initial local model of the first terminal by using a random vector of a modified first sub-key. The modified first sub-key is obtained based on the training time information and the first sub-key of the first terminal.

In still another possible implementation, before the server sends the training information, the method further includes: The server sends a broadcast message. The broadcast message includes at least one of the following information: an identifier of a training task, model structure information, a public key of the server, and at least one prime number.

In still another possible implementation, before the server sends the training information, the method further includes: The server receives a registration request. The registration request includes at least one of the following information: the identifiers of the at least two second terminals and public keys of the at least two second terminals. The server sends a registration response.

In still another possible implementation, if the broadcast message does not carry the public key *PKₒ* of the server, the registration response may carry the public key *PKₒ*.

If the broadcast message does not carry a prime number *p*, the registration response may carry the prime number *p*.

If the broadcast message does not carry the identifier of the training task, the registration response may carry the identifier of the training task.

If the broadcast message does not carry the model structure information, the registration response may carry the model structure information.

In addition, if time intervals between all rounds of training are the same, the registration response may further carry the time interval between rounds of training.

In still another possible implementation, after the server sends the registration response, the method further includes: The server receives a first obtaining request. The first obtaining request includes the identifier of the training task. The server sends a first feedback message. The first feedback message includes at least one of the following information: the identifier of the training task, the identifiers of the at least two second terminals, and the public keys of the at least two second terminals.

In still another possible implementation, before the server sends the training information, the method further includes: The server receives a training participation request.

In still another possible implementation, the training participation request includes at least one of the following information: processor usage of the at least two second terminals and electricity quantities of the at least two second terminals.

In still another possible implementation, the identifiers of the at least two second terminals that participate in the current round of training include at least one of the following identifiers: the identifiers of the at least two second terminals that newly participate in the current round of training, and an identifier of a terminal that participates in the previous round of training and that exits the current round of training.

In still another possible implementation, the training information further includes at least one of the following information: the first timer and a quantity of training rounds.

According to a third aspect, a communication apparatus is provided. The communication apparatus may implement the communication method in the first aspect. For example, the communication apparatus may be a chip or a device. The foregoing method may be implemented by software, hardware, or hardware executing corresponding software.

In a possible implementation, the apparatus includes a transceiver unit and a processing unit. The transceiver unit is configured to receive training information. The training information includes a global model in a previous round and identifiers of at least two second terminals that participate in a current round of training. The first terminal is any one of the at least two second terminals. The transceiver unit is further configured to send a local model of the first terminal. The local model is obtained based on the global model in the previous round and a shared key. The shared key is generated based on a private key of the first terminal and a public key of a third terminal. The third terminal is any one of the at least two second terminals other than the first terminal.

Optionally, the processing unit is configured to scramble an initial local model of the first terminal by using a random vector of the shared key, to obtain the local model of the first terminal.

Optionally, the processing unit is further configured to perform modulo division on the local model that is of the first terminal and that is obtained through scrambling.

Optionally, the transceiver unit is further configured to send a sub-key set. The sub-key set includes a correspondence between at least two first sub-keys of the shared key and the identifiers of the at least two second terminals, and a correspondence between at least two second sub-keys of a random seed and the identifiers of the at least two second terminals.

Optionally, the transceiver unit is further configured to send a first exit notification before a first timer expires. The first exit notification includes the shared key.

Optionally, the first exit notification further includes an exit reason.

Optionally, the transceiver unit is further configured to receive a second exit notification after a second timer expires; and the transceiver unit is further configured to send the shared key.

Optionally, the training information further includes training time information. The training time information includes at least one of the following information: a timestamp of a server and a time variable function. The processing unit is further configured to determine a modified first sub-key based on the training time information and a first sub-key of the first terminal. The processing unit is further configured to scramble the local model of the first terminal by using a random vector of the modified first sub-key.

Optionally, the transceiver unit is further configured to receive a broadcast message. The broadcast message includes at least one of the following information: an identifier of a training task, model structure information, a public key of the server, and at least one prime number.

Optionally, the transceiver unit is further configured to send a registration request. The registration request includes at least one of the following information: an identifier of the first terminal and a public key of the first terminal. The transceiver unit is further configured to receive a registration response.

Optionally, the transceiver unit is further configured to send an obtaining request. The obtaining request includes the identifier of the training task. The transceiver unit is further configured to receive a feedback message. The feedback message includes at least one of the following information: the identifier of the training task, the identifiers of the at least two second terminals, and public keys of the at least two second terminals.

Optionally, the transceiver unit is further configured to send a training participation request.

Optionally, the training participation request includes at least one of the following information: processor usage of the first terminal and an electricity quantity of the first terminal.

Optionally, the identifiers of the at least two second terminals that participate in the current round of training include at least one of the following identifiers: identifiers of second terminals that newly participate in the current round of training, and an identifier of a terminal that participates in the previous round of training and that exits the current round of training.

Optionally, the training information further includes at least one of the following information: the first timer and a quantity of training rounds.

In another possible implementation, the communication apparatus is configured to perform the method in the first aspect and the possible implementations of the first aspect.

According to a fourth aspect, a communication apparatus is provided. The communication apparatus may implement the communication method in the second aspect. For example, the communication apparatus may be a chip or a device. The foregoing method may be implemented by software, hardware, or hardware executing corresponding software.

In a possible implementation, the apparatus includes a transceiver unit and a processing unit. The transceiver unit is configured to send training information. The training information includes a global model in a previous round and identifiers of at least two second terminals that participate in a current round of training. The transceiver unit is further configured to receive local models of the at least two second terminals. The local models are obtained based on the global model in the previous round and a shared key between the at least two second terminals. The processing unit is configured to aggregate the local models of the at least two second terminals based on the shared key between the at least two second terminals, to obtain an updated global model in the current round.

Optionally, the local models of the at least two second terminals are obtained by scrambling initial local models of the at least two second terminals by using a random vector of the shared key. The processing unit is configured to: aggregate the local models of the at least two second terminals, and eliminate the random vector of the shared key between the at least two second terminals, to obtain the global model.

Optionally, the transceiver unit is further configured to receive a sub-key set. The sub-key set includes a correspondence between at least two first sub-keys of the shared key and the identifiers of the at least two second terminals, and a correspondence between at least two second sub-keys of a random seed and the identifiers of the at least two second terminals. The transceiver unit is further configured to distribute the at least two first sub-keys and the at least two second sub-keys. The local models of the at least two second terminals are obtained by scrambling the initial local models of the at least two second terminals by using random vectors of the at least two first sub-keys and random vectors of the at least two second sub-keys.

Optionally, the processing unit is further configured to start a first timer. The transceiver unit is further configured to receive a first exit notification from a first terminal before the first timer expires. The first exit notification includes the shared key. The first terminal is any one of the at least two second terminals.

Optionally, the first exit notification further includes an exit reason.

Optionally, the processing unit is further configured to start a second timer. Duration of the second timer is greater than duration of the first timer. The transceiver unit is further configured to send a second exit notification after the second timer expires. The transceiver unit is further configured to receive the shared key from the first terminal.

Optionally, the processing unit is further configured to start a second timer. The transceiver unit is further configured to: if a local model from the first terminal is received before the second timer expires, send a first obtaining request to at least one third terminal, and receive a first feedback message. The first feedback message includes at least one of the second sub-keys. The first terminal is any one of the at least two second terminals. The at least one third terminal is at least of the at least two second terminals other than the first terminal. Alternatively, the transceiver unit is further configured to: if a local model from the first terminal is received before the second timer expires, send a second obtaining request to the first terminal, and receive a second feedback message. The second feedback message includes the random seed. Alternatively, the transceiver unit is further configured to: when the second timer expires, and a local model of the first terminal is not received and a first sub-key of the first terminal is not received, send a third obtaining request to the at least one third terminal, and receive a third feedback message. The third obtaining request includes an identifier of the first terminal. The third feedback message includes at least one of the first sub-keys and at least one of the second sub-keys.

Optionally, the training information further includes training time information. The training time information includes at least one of the following information: a timestamp of a server and a time variable function. The local model of the first terminal is obtained by scrambling an initial local model of the first terminal by using a random vector of a modified first sub-key. The modified first sub-key is obtained based on the training time information and the first sub-key of the first terminal.

Optionally, the transceiver unit is further configured to send a broadcast message. The broadcast message includes at least one of the following information: an identifier of a training task, model structure information, a public key of the server, and at least one prime number.

Optionally, the transceiver unit is further configured to receive a registration request. The registration request includes at least one of the following information: the identifiers of the at least two second terminals and public keys of the at least two second terminals. The server sends a registration response.

Optionally, the transceiver unit is further configured to receive a first obtaining request. The first obtaining request includes the identifier of the training task. The transceiver unit is further configured to send a first feedback message. The first feedback message includes at least one of the following information: the identifier of the training task, the identifiers of the at least two second terminals, and public keys of the at least two second terminals.

Optionally, the transceiver unit is further configured to receive a training participation request.

Optionally, the training participation request includes at least one of the following information: processor usage of the at least two second terminals and electricity quantities of the at least two second terminals.

Optionally, the identifiers of the at least two second terminals that participate in the current round of training include at least one of the following identifiers: the identifiers of the at least two second terminals that newly participate in the current round of training, and an identifier of a terminal that participates in the previous round of training and that exits the current round of training.

Optionally, the training information further includes at least one of the following information: the first timer and a quantity of training rounds.

In another possible implementation, the communication apparatus is configured to perform the method in the second aspect and the possible implementations of the second aspect.

In still another possible implementation, the communication apparatus in the third aspect or the fourth aspect includes a processor coupled to a memory. The processor is configured to support the apparatus in implementing corresponding functions in the foregoing communication method. The memory is configured to couple to the processor. The memory stores a computer program (or a computer executable instruction) and/or data necessary for the apparatus. Optionally, the communication apparatus may further include a communication interface, configured to support communication between the apparatus and another network element, for example, sending or receiving of data and/or a signal. For example, the communication interface may be a transceiver, a circuit, a bus, a module, or another type of communication interface. Optionally, the memory may be located inside the communication apparatus and integrated with the processor, or may be located outside the communication apparatus.

In still another possible implementation, the communication apparatus in the third aspect or the fourth aspect includes a processor and a transceiver apparatus. The processor is coupled to the transceiver apparatus. The processor is configured to execute a computer program or instructions, to control the transceiver apparatus to receive and send information. When the processor executes the computer program or the instructions, the processor is further configured to perform the foregoing method by using a logic circuit or by executing code instructions. The transceiver apparatus may be a transceiver, a transceiver circuit, or an input/output interface; and is configured to receive a signal from another communication apparatus other than the communication apparatus and transmit the signal to the processor, or send a signal from the processor to another communication apparatus other than the communication apparatus. When the communication apparatus is a chip, the transceiver apparatus is a transceiver circuit or an input/output interface.

When the communication apparatus in the third aspect or the fourth aspect is a chip, a sending unit may be an output unit, for example, an output circuit or a communication interface; and a receiving unit may be an input unit, for example, an input circuit or a communication interface. When the communication apparatus is a terminal, a sending unit may be a transmitter or a transmitter machine, and a receiving unit may be a receiver or a receiver machine.

According to a fifth aspect, a communication system is provided. The communication system includes the communication apparatus in the third aspect or any implementation of the third aspect, and the communication apparatus in the fourth aspect or any implementation of the fourth aspect.

According to a sixth aspect, a computer-readable storage medium is provided. The computer-readable storage medium stores a computer program or instructions. When the program or the instructions or both are executed by a processor, the method in the first aspect or any implementation of the first aspect is performed, or the method in the second aspect or any implementation of the second aspect is performed.

According to a seventh aspect, a computer program product is provided. When the computer program product is executed on a computing device, the method in the first aspect or any implementation of the first aspect is performed, or the method in the second aspect or any implementation of the second aspect is performed.

### BRIEF DESCRIPTION OF DRAWINGS

FIG. 1 is a schematic of a federated learning architecture according to an embodiment of this application;
FIG. 2 is a schematic of a structure of a communication system according to an embodiment of this application;
FIG. 3 is a schematic flowchart of a communication method according to an embodiment of this application;
FIG. 4 is a schematic flowchart of another communication method according to an embodiment of this application;
FIG. 5 is a schematic flowchart of still another communication method according to an embodiment of this application;
FIG. 6 is a schematic flowchart of still another communication method according to an embodiment of this application;
FIG. 7 is a schematic of a structure of a communication apparatus according to an embodiment of this application; and
FIG. 8 is a schematic of a structure of another communication apparatus according to an embodiment of this application.

### DESCRIPTION OF EMBODIMENTS

Embodiments of this application are described below with reference to the accompanying drawings in embodiments of this application.

### Federated learning

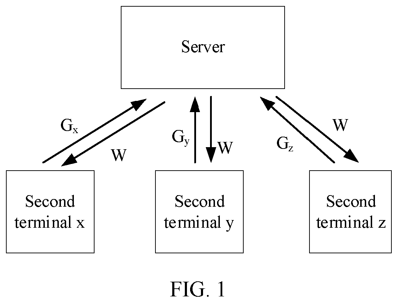

The concept of federated learning is put forward to effectively resolve a dilemma faced by current development of artificial intelligence. On the premise of ensuring privacy and security of user data to some extent, one or more second terminals (also referred to as a distributed node, an edge device, or a client device) and a server (also referred to as a central node or a central end) collaborate to efficiently complete a model learning task. FIG. 1 is a schematic of a federated learning architecture according to an embodiment of this application. Three second terminals (a second terminal x, a second terminal y, and a second terminal z) are shown in the figure. However, a quantity of second terminals is not limited in this application. Currently, the FL architecture is a most widely used training architecture in the FL field. A federated averaging (FedAvg) algorithm is a basic algorithm of FL. An algorithm process is approximately as follows:
(1) A server initializes a to-be-trained model ${w}_{g}^{0}$, and broadcasts and sends the model to all the second terminals.
(2) In an *r* ∈ [1, *R*]^{th} round, the second terminal *y* ∈ [1, *Y*] performs, based on a local dataset 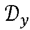 , an *r*^{th} round of training on a received global model ${w}_{g}^{r - 1}$ to obtain a native training result ${w}_{y}^{r}$, and reports the native training result to the server. Similarly, the second terminal x and the second terminal z report native training results.
(3) The server collects native training results from all (or some) second terminals. It is assumed that a set of second terminals that upload local models in the *r*^{th} round is 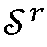 . In this case, the server performs weighted averaging by using sample quantities corresponding to the second terminals as weights, to obtain a new global model. A specific update rule is 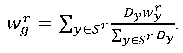 Then, the server broadcasts and sends a newest version of global model ${w}_{g}^{r}$ to all the second terminals for a new round of training.
(4) Steps (2) and (3) are repeated until the model finally converges or a quantity of training rounds reaches an upper limit.

In addition to the native model ${w}_{y}^{r}$, a native gradient ${g}_{y}^{r}$of training may be further reported. The server averages native gradients, and updates the global model based on a direction of an average gradient.

It can be learned that a dataset exists in a second terminal in the FL framework. In other words, the second terminal collects the native dataset, performs native training, and reports a native result (a model or a gradient) obtained through training to the server. The server itself has no dataset, and is only responsible for performing fusion processing on the training results of the second terminals to obtain the global model and delivering the global model to the second terminals.

The solutions in this application are not only applicable to the federated learning architecture, but also applicable to a neural network training architecture that has an architecture similar to the federated learning architecture.

### Privacy protection federated learning:

Privacy protection paradigms mainly include differential privacy, homomorphic encryption, secure multi-party computation, and the like. For differential privacy, random noise is added to raw data or a raw model to avoid a case of inferring raw data information from an updated model, thereby protecting privacy of the raw data. However, introduction of noise severely affects a convergence speed and learning precision of model training. For homomorphic encryption, the server does not need to use native model plaintexts of the second terminals in a model aggregation phase, but may directly perform an operation and computation on ciphertexts and then return computation results to the second terminals. However, computation complexity of a homomorphic encryption algorithm is very high. The most advanced fully homogeneous encryption solution is thousands of times less efficient than secure multi-party computation.

Therefore, this application mainly discusses use of a secure multi-party computation method to provide security protection for federated learning.

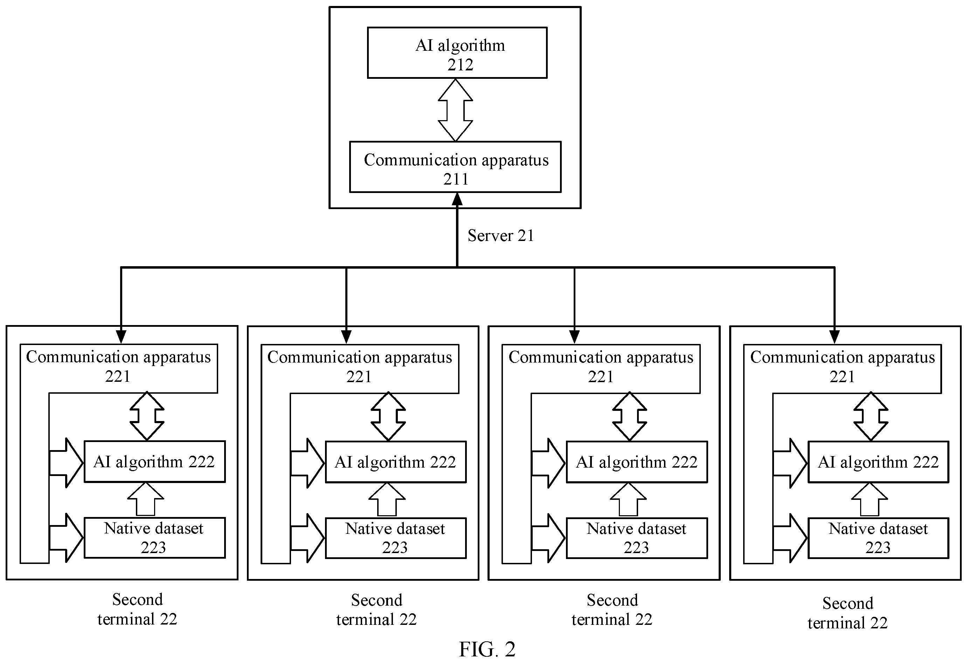

FIG. 2 is a schematic of a structure of a communication system according to an embodiment of this application. The communication system includes a server 21 and at least two second terminals 22. The server 21 may be connected to the at least two second terminals 22 in a wired or wireless manner. The server 21 includes a communication apparatus 211, and may further include an AI algorithm 212. The communication apparatus 211 may also be referred to as a data service server (data service server, DSS) module. The second terminal 22 includes a communication apparatus 221, and may further include an AI algorithm 222 and a native dataset 223. The communication apparatus 221 may also be referred to as a data service client (data service client, DSC) module.

In the second terminal 22, native data of the second terminal 22 is stored in the native dataset. The AI algorithm module performs, by using the native dataset, native AI model training on a global model that is received from the server 21 in a previous round, to obtain a local model of the second terminal 22. The local model is obtained based on the global model in the previous round and a shared key. The shared key is generated based on a private key of the second terminal 22 and a public key of another second terminal 22. The communication apparatus 221 sends the local model of the second terminal 22 to the communication apparatus 211 of the server 21.

In the server 21, the communication apparatus 211 receives local models of the at least two second terminals 22, and aggregates the local models of the at least two second terminals 22 based on the shared key between the at least two second terminals 22, to obtain an updated global model in the current round.

The second terminal 22 may be deployed on land, including indoor or outdoor, handheld, wearable, or in-vehicle; or may be deployed on water, for example, on a ship; or may be deployed in the air, for example, on an airplane, an uncrewed aerial vehicle, a balloon, or a satellite. The second terminal 22 may be a mobile phone (mobile phone), a personal computer (personal computer, PC), a tablet computer (tablet), a computer with wireless sending and receiving functions, a vehicle to everything (vehicle to everything, V2X) terminal, a vehicle, a virtual reality (virtual reality, VR) terminal device, an augmented reality (augmented reality, AR) terminal device, a wireless terminal in industrial control (industrial control), a wireless terminal in self-driving (self-driving), a wireless terminal in remote medical (remote medical), a wireless terminal in a smart grid (smart grid), a wireless terminal in transportation safety (transportation safety), a wireless terminal in a smart city (smart city), and a wireless terminal in a smart home (smart home). Embodiments of this application do not limit application scenarios.

The server 21 may be a base station or a core network network element. For example, when the server 21 is a base station, the server may be a device configured to support a terminal in accessing a communication system on an access network side, for example, may be an evolved nodeB (evolved nodeB, eNB) in a communication system of 4G access technologies, a next generation nodeB (next generation nodeB, gNB) in a communication system of 5G access technologies, a transmission and reception point (transmission reception point, TRP), a relay node (relay node), or an access point (access point, AP). When the server 21 is a core network network element, the server may be a mobility management entity (mobilitymanagement entity, MME) or a serving gateway (serving gateway, SGW) in a communication system of 4G access technologies, or an access and mobility management function (access and mobility management function, AMF) network element or a user plane function (user plane function, UPF) network element in a communication system of 5G access technologies.

Based on the architecture of the communication system shown in FIG. 2, the following describes in detail a secure multi-party computation solution provided in this application.

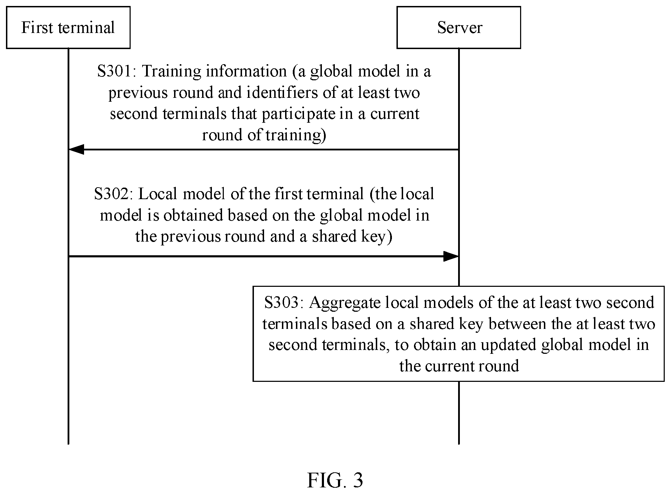

FIG. 3 is a schematic flowchart according to an embodiment of this application. The method is applied to an interaction process between a server and at least two second terminals. In this embodiment, an interaction process between the server and a first terminal, and more specifically, an interaction process between *DSS* of the server and *DSCᵢ* of the first terminal, is used as an example. The first terminal is any one of the at least two second terminals. The method may include the following steps.

S301: The server sends training information.

Correspondingly, the first terminal receives the training information.

The server sends training information when each round of training starts. The server may broadcast the training information, or may unicast the training information to each of the at least two second terminals.

The server selects, from all second terminals that participate in training, at least two second terminals that participate in a current round of training. For example, the server may select, based on loads, electricity quantities, and the like of all the second terminals that participate in training, the at least two second terminals that participate in the current round of training. The server sends the training information. The training information includes a global model in a previous round and identifiers of the at least two second terminals that participate in the current round of training. The global model in the previous round is obtained by the server through aggregation based on local models sent by at least two second terminals that participate in the previous round of training.

For example, if a training round interval is dynamically set, the training information may further include a first timer. The first timer indicates an original deadline for uploading a local model by a client.

For example, the training information may further include a quantity of training rounds. The quantity of training rounds indicates a specific number of the current training round.

S302: The first terminal sends a local model of the first terminal.

Correspondingly, the server receives the local model of the first terminal.

After receiving the training information, the first terminal performs native AI model training by using a native dataset, to obtain an initial local model. Then, the first terminal obtains a final local model based on the global model in the previous round and a shared key, and uses the final local model as the local model of the first terminal. The shared key is generated based on a private key of the first terminal and a public key of a third terminal. The third terminal is any one of the at least two second terminals other than the first terminal.

After obtaining the local model of the first terminal, the first terminal sends the local model to the server.

S303: The server aggregates local models of the at least two second terminals based on a shared key between the at least two second terminals, to obtain an updated global model in the current round.

The server receives the local models respectively sent by the at least two second terminals, and aggregates the local models of the at least two second terminals based on the shared key between the at least two second terminals, to obtain the updated global model in the current round.

However, because each local model is obtained based on the global model in the previous round and the shared key, the server cannot obtain an initial local model after receiving each local model, thereby improving security of a neural network training process.

In the communication method provided in this embodiment of this application, local models are scrambled based on a shared key between terminals, so that the server cannot infer initial local models or raw local models of the terminals, thereby improving security in a neural network training process.

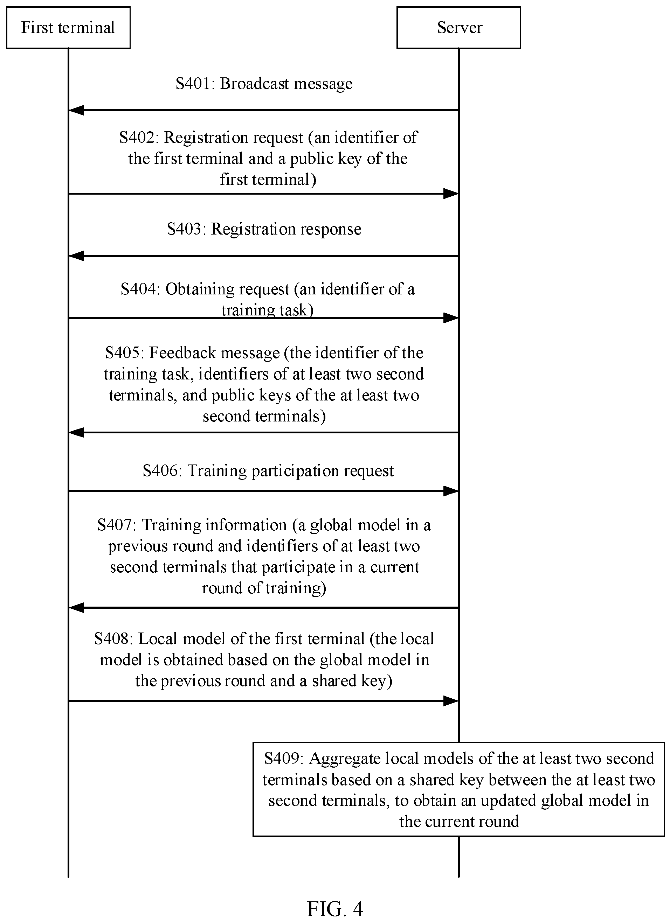

FIG. 4 is a schematic flowchart of another communication method according to an embodiment of this application. The method is applied to an interaction process between a server and at least two second terminals. In this embodiment, an interaction process between the server and a first terminal, specifically an interaction process between *a DSS* of the server and *DSCᵢ* of the first terminal, is used as an example. The first terminal is any one of the at least two second terminals. The method may include the following steps.

S401: The server sends a broadcast message.

Correspondingly, the first terminal receives the broadcast message.

The server may send the broadcast message before registration and training start, or may send the broadcast message in a registration process. A sequence of sending the broadcast message is not limited in this application.

The broadcast message includes at least one of the following information: an identifier of a training task, model structure information, a public key of the server, and a prime number. There may be one or more training tasks performed by the server. The identifier of the training task may be used to identify the to-be-performed training task. For example, an identifier of a facial recognition training task is *ID*₁, and an identifier of a natural language recognition training task is *ID*₂. The identifier of the training task is unique in a communication system. The model structure information indicates a model structure used in the training process. The server generates a key pair (*SKₒ*, *PKₒ*). The public key *PKₒ* of the server in the broadcast message is used for subsequent encrypted communication between the server and the at least two second terminals. The server selects a prime number *p*. The prime number is used for a subsequent modulo division operation. The prime number is greater than a quantity of terminals that participate in training. The server adds the prime number *p* to the broadcast message.

The server may broadcast the foregoing one or more messages.

The following steps S402 and S403 are a registration process.

S402: The first terminal sends a registration request.

Correspondingly, the server receives the registration request.

The first terminal generates a key pair (*SKᵢ*, *PKᵢ*). The first terminal sends the registration request to the server. The registration request includes at least one of the following information: an identifier *ID_{í}* of the first terminal and a public key *PKᵢ* of the first terminal.

In the registration process, the first terminal registers with the server, and sends the identifier *IDᵢ* of the first terminal and the public key *PKᵢ* of the first terminal to the server for storage for subsequent key sharing between terminals, to implement secure model aggregation based on multi-party computation.

S403: The server sends a registration response.

Correspondingly, the first terminal receives the registration response.

The server calculates a shared key sec*ᵢₒ* between the first terminal and the server based on a private key *SKₒ* of the server and the received public key *PKᵢ* of the first terminal for subsequent encryption and decryption between the first terminal and the server. The server stores a correspondence between the identifier IDᵢ of the first terminal and each of the public key *PKᵢ* of the first terminal and the shared key sec*ᵢₒ*.

The server sends a registration response to *DSCᵢ*.

If the broadcast message does not carry the public key *PKₒ* of the server, the registration response may carry the public key *PKₒ*.

If the broadcast message does not carry a prime number *p*, the registration response may carry the prime number *p*.

If the broadcast message does not carry the identifier of the training task, the registration response may carry the identifier of the training task.

If the broadcast message does not carry the model structure information, the registration response may carry the model structure information.

In addition, if time intervals between all rounds of training are the same, the registration response may further carry the time interval between rounds of training.

Further, the first terminal may calculate the shared key sec*ᵢₒ* (the same as the shared key sec*ᵢₒ* calculated by the server) between the first terminal and the server based on the private key *SKᵢ* of the first terminal and the public key *PKₒ* of the server for subsequent encryption and decryption of a signaling message between the first terminal and the server.

S404: The first terminal sends an obtaining request.

Correspondingly, the server receives the obtaining request.

The first terminal sends the obtaining request to the server to request to obtain identifiers and public keys of all terminals that register with the server. The obtaining request includes the identifier of the training task.

S405: The server sends a feedback message.

Correspondingly, the first terminal receives the feedback message.

After receiving the obtaining request of the first terminal, the server sends the feedback message to the first terminal. The feedback message includes at least one of the following information: the identifier of the training task, the identifiers of the at least two second terminals, and public keys of the at least two second terminals. The at least two second terminals are terminals that may participate in the training task.

The following steps S406 to S409 are a training process.

Based on the foregoing registration procedure, the server and the at least two second terminals collaboratively complete a plurality of rounds of training until training converges.

For each round of training, the server selects a participant of the round of training, the participant scrambles a generated initial local model to obtain a final local model, and sends the local model to the server; and the server performs secure aggregation on one or more local models received from one or more participants. If training converges, training ends; or if training does not converge, a new round of training procedure is executed.

The following uses any round of training as an example for description.

S406: The first terminal sends a training participation request.

Correspondingly, the server receives the training participation request.

This step is an optional step. The first terminal may actively send the training participation request, to obtain a reward of the server or the like. Alternatively, the first terminal may not send the training participation request, and directly perform step S407.

The training participation request is used to request to participate in the current round of training. The training participation request may carry the identifier of the first terminal.

For example, the training participation request may include at least one of the following information: processor usage of the first terminal and an electricity quantity of the first terminal. After receiving training participation requests of the at least two second terminals, the server may select, based on at least one piece of information of processor usage of the at least two second terminals and electricity quantities of the at least two second terminals, a terminal that participates in training. For example, the server preferentially selects a terminal with low processor usage and a large electricity quantity.

S407: The server sends training information.

Correspondingly, the first terminal receives the training information.

After selecting the at least two second terminals that participate in the current round of training, the server sends the training information. The training information includes a global model in a previous round and the identifiers of the at least two second terminals that participate in the current round of training.

The server may broadcast the training information.

The server may also send the training information to the first terminal in response to the training participation request of the first terminal. If the server agrees that the first terminal participates in the current round of training, the training information may be acknowledgment (acknowledgment, ACK), and the training information includes the global model in the previous round and the identifiers of the at least two second terminals that participate in the current round of training. The identifiers of the at least two second terminals that participate in the current round of training may be identifiers of second terminals that newly participate in the current round of training. In this case, the first terminal may obtain, based on the identifiers of the second terminals that newly participate in the current round of training and the identifiers of the second terminals that participate in the previous round of training, identifiers of all second terminals that participate in training. The identifiers of the at least two second terminals that participate in the current round of training may also be identifiers of terminals that participate in the previous round of training and that exit the current round of training. In this case, the first terminal may obtain, based on the identifiers of the terminals that participate in the previous round of training and that exit the current round of training, the identifiers of all the second terminals that participate in training.

For example, if a training round interval is dynamically set, the training information may further include a first timer. The first timer indicates a deadline for uploading a local model by the first terminal.

For example, the training information may further include a quantity of training rounds. The quantity of training rounds indicates a specific number of the current training round.

If the server does not agree that the first terminal participates in the current round of training, the training information may be negative acknowledgment (negative-acknowledgment, NACK).

S408: The first terminal sends the local model of the first terminal.

Correspondingly, the server receives the local model of the first terminal.

The first terminal has obtained the identifiers and the public keys of the at least two second terminals in step S405. The first terminal may obtain, based on the training information in the current round, public keys of all third terminals that participate in the current round of training. Then, the first terminal calculates, based on the private key *SKᵢ* of the first terminal and the public key *PK*ⱼ of each another third terminal that participates in the current round of training, a shared key *s_{i,j}* between *DSCᵢ and DSCⱼ* of another terminal that participates in the current round of training. The third terminal is any one of the at least two second terminals other than the first terminal.

The first terminal obtains an initial local model *xᵢ* (or referred to as a native model) through training based on the global model in the previous round and a native dataset. For example, *xᵢ* is a vector.

The first terminal constructs a scrambled model *yᵢ* = *xᵢ* + Σ_{*i*<}*ⱼPRG*(*s_{i,j}*) *-* Σ_{*i*>}*ⱼPRG*(*s_{i,j}*)*mod p* (that is, the final local model) based on a shared key *s_{i,j}* between the first terminal and *DSCⱼ* of the third terminal. Herein, PRG is a pseudo random number generator (Pseudo-Random Generator), and p is a prime number sent by the server (functions of the prime number p and modulo division are to prevent the scrambled model from becoming excessively large and therefore causing storage overflow of a scrambled model in a computer). An operation of *mod p* is optional. The first terminal sends the generated scrambled model *yᵢ* to the server.

S409: The server aggregates local models of the at least two second terminals based on a shared key between the at least two second terminals, to obtain an updated global model in the current round.

After receiving the local models sent by the at least two second terminals, the server calculates an aggregated model Σ*yᵢ* of these local models. Because symbols of *DSCⱼ* of the first terminal and *DSCⱼ* of the third terminal are opposite in a scrambling item *PRG* (*s_{i,j}*), all scrambling items in the scrambled model are canceled, that is, Σ*yᵢ* = Σ*xᵢ*.

For example, three terminals participate in training. A scrambled model of a terminal 1 is *y*₁ = *x*₁ + *PRG*(*s*_{1,2}) *+ PRG*(*s*_{1,3}) *mod p,* a scrambled model of a terminal 2 is *y*₂ = *x*₂ *+ PRG*(*s*_{2,3}) *- PRG*(*s*_{2,1}) *= x*₂ + *PRG(s*_{2,3}) *- PRG*(*s*_{1,2}) *mod p,* and a scrambled model of a terminal 3 is y*₃* = *x*₃ *- PRG*(*s*_{3,1}) *- PRG*(*s*_{3,2}) = *x*₃ *- PRG*(*s*_{1,3}) - *PRG*(*s*_{2,3}) *mod p .* Therefore, *y*₁ + *y*₂ + *y*₃ = *x*₁ + *x*₂ + *x*₃ + *PRG*(*s*_{1,2}) *+ PRG*(*s*_{1,3}) + *PRG*(*s*_{2,3}) - *PRG*(*s*_{1,2}) - *PRG*(*s*_{1,3}) *- PRG*(*s*_{*2*,3}) = *x*₁ + *x*₂ + *x*₃ *mod p*.

In the communication method provided in this embodiment of this application, local models are scrambled based on a shared key between terminals, so that the server cannot infer initial local models or raw local models of the terminals, thereby improving security in a neural network training process.

In this method, privacy federated learning can be implemented.

This architecture is loosely coupled with an AI learning framework, and is applicable to all federated learning training but is not limited to a specific to-be-used AI training algorithm.

For a wireless scenario, if a training participant *DSCᵢ* exits model training (for example, in a scenario in which the first terminal actively exits, is powered off, or encounters communication interruption) before sending an updated model *yᵢ*, a scrambling item Σ_{*i*<}*ⱼPRG*(*s_{i,j}*) - Σ_{*i*>}*ⱼPRG*(*s_{j,i}*) cannot be canceled in an aggregated model of a *DSS.* Similarly, for example, three terminals participate in training. A scrambled model of a terminal 1 is *y*₁ = *x*₁ + *PRG*(*s*_{1,2}) + *PRG*(*s*_{1,3}) *mod p ,* a scrambled model of a terminal 2 is *y*₂ = *x*₂ + *PRG*(*s*_{2,3}) - *PRG*(*s*_{1,2}) *mod p,* and a scrambled model of a terminal 3 is *y*₃ = *x*₃ - *PRG*(*s*_{1,3}) - *PRG*(*s*_{2,3}) *mod p.* If the terminal 2 goes offline, the server aggregates the scrambled models of the terminal 1 and the terminal 3 to obtain *y*₁ + *y*₃ = *x*₁ + *x*₃ *+ PRG*(*s*_{1,2}) - *PRG*(*s*_{2,3}) *mod p.* Herein, *PRG*(*s*_{1,2}) - PRG(*s*_{2,3}) is an opposite number of a model scrambling item of the terminal 2 and cannot be canceled. For the foregoing offline case, it may be considered to request to share a key *s_{i,j}* from another terminal *DSCⱼ*, to obtain a scrambling vector *PRG*(*s_{i,j}*). However, if *DSCⱼ* of the terminal does not respond (for example, *DSCⱼ* also exits), the shared key *s_{i,j}* cannot be obtained.

To resolve this problem, a threshold key sharing method may be used. A key holder divides a to-be-shared key *S*₀ into m sub-keys (m < p') and separately distributes the m sub-keys to m other terminals. When t or more sub-keys (t<m) are obtained, the key *S*₀ can be recovered. First, the key holder constructs a (t-1)-order polynomial g(x) = *S*₀ + *a*₁*x* + *a*₂*x²* + ... + *a*_{*t*-1}*x*^{*t*-1}, where *a*₁,*a*₂, ..., and *a*_{*t*-1} are positive integers that are randomly selected and that are less than a prime number p'. Then, the key holder calculates m coordinate pairs (that is, sub-keys) that may be (1, g(1)), (2, g(2)), ..., and (m, g(m)), and separately distributes the sub-keys to the m other terminals. Because the polynomial g(x) includes t unknown numbers *S*₀*, a*₁,*a*₂, ..., and *a*_{*t*-1}, when the t or more sub-keys are obtained, the polynomial g(x) can be recovered. Finally, the key *S*₀ can be obtained through calculating g(0). Further, p' is a prime number greater than a quantity of terminals that participate in training, and may be the same as or different from p. Herein, p' may also be carried in the broadcast message.

In this embodiment, by using the foregoing threshold sharing solution, *s_{i,j}* can be divided into n meaningless sub-keys that are shared with all the n terminals that participate in model training. When the *DSS* obtains k or more sub-keys from online terminals, *sᵢⱼ* can be recovered (for example, by using a Lagrange interpolating polynomial), where k≤n<p'.

However, threshold key sharing may cause a false offline problem. In other words, after the server recovers the shared key *s_{i,j}* between the offline terminal *DSCᵢ* and all other terminals, the server receives a model *yᵢ* = *xᵢ* + Σ_{*i*<}*ⱼPRG*(*s_{i,j}*) - Σ_{*i*>}*ⱼPRG*(*s_{i,j}*)*mod p* (caused by a communication delay) uploaded by the offline terminal. In this case, *yᵢ* is known, and *s_{i,j}* is known (that is, Σ_{*i*<}*ⱼPRG*(*s_{i,j}*) *-* Σ_{*i*>}*ⱼPRG*(*s_{i,j}*)is known). Therefore, a model *xᵢ* is directly exposed on the server. To resolve this problem, the scrambled model may be constructed as *yᵢ* = *xᵢ + PRG*(*Bᵢ*) + Σ_{*i*<}*ⱼPRG*(*s_{i,j}*) *-* Σ_{*i*>}*ⱼPRG*(*s_{j,i}*)*mod p.* In other words, a new perturbation item *PRG*(*Bᵢ*) is added, where *Bᵢ* is a random seed selected by the terminal *DSCᵢ*.

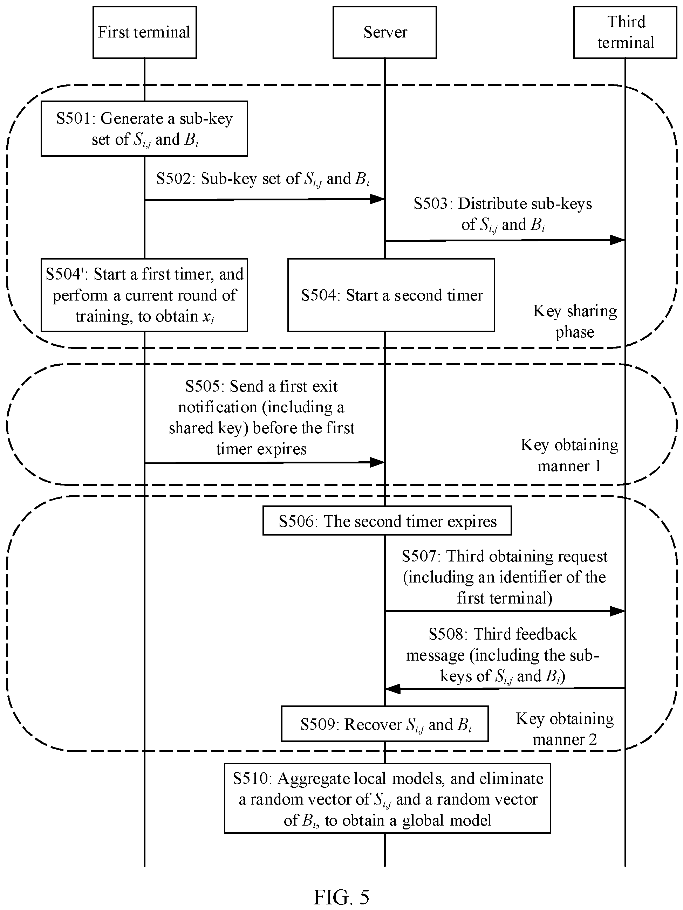

FIG. 5 is a schematic flowchart of still another communication method according to an embodiment of this application. The method is applied to an interaction process between a server and at least two second terminals. In this embodiment, an interaction process between the server and a first terminal is used as an example. The first terminal is any one of the at least two second terminals. A difference between this process and the embodiment shown in FIG. 4 lies in a model scrambling and aggregation process. The following mainly describes the model scrambling and aggregation process. For another process other than the model scrambling and aggregation process, refer to the embodiment shown in FIG. 4. The method may include the following steps.

S501: A first terminal *DSCᵢ* divides a shared key *s_{i,j}* into at least two first sub-keys, divides a random seed *Bᵢ* into at least two second sub-keys, associates the at least two first sub-keys with at least two second terminals that participate in a current round of training, and associates the at least two second sub-keys with the at least two second terminals that participate in the current round of training, to generate a sub-key set of *s_{i,j} and Bᵢ*.

The sub-key set includes a correspondence between the at least two first sub-keys of the shared key and the identifiers of the at least two second terminals, and a correspondence between the at least two second sub-keys of the random seed and the identifiers of the at least two second terminals.

S502: The first terminal *DSCᵢ* sends the sub-key set of *s_{i,j} and Bᵢ* to a server.

Correspondingly, the server receives the sub-key set.

S503: The server distributes sub-keys of *s_{i,j} and Bᵢ* to a third terminal, that is, distributes the at least two first sub-keys and the at least two second sub-keys. The third terminal is any one of the at least two second terminals other than the first terminal.

Correspondingly, the third terminal receives one first sub-key and one second sub-key.

S504: The server starts a second timer.

S504': When the server starts the second timer, the first terminal starts a first timer, and performs the current round of training based on a global model in a previous round and a native dataset, to obtain an initial local model *xᵢ*.

The first timer indicates a deadline for uploading the local model by the first terminal. A transmission delay of the first terminal is considered for the second timer. Duration of the second timer is greater than duration of the first timer.

The first terminal performs the current round of training based on the global model in the previous round and the native dataset, to obtain the initial local model *xᵢ*.

In this embodiment, the first terminal exits training before sending the local model. After the server obtains an aggregated model, a scrambling item Σ_{*i*<}*ⱼPRG*(*s_{i,j}*) - Σ*_{i,j}PRG*(*s_{j,i}*) cannot be canceled by using the aggregated model. Therefore, the server needs to obtain the shared key.

The server may obtain the shared key in the following manners:

### Manner 1 for obtaining the shared key:

S505: The first terminal sends a first exit notification to the server before the first timer expires.

Correspondingly, the server receives the first exit notification.

When the first terminal cannot send the local model, the first terminal actively notifies the server that the first terminal exits training.

The first exit notification includes the shared key.

Further, the first exit notification may further include an exit reason. The exit reason includes high processor usage, insufficient power, and the like of the first terminal. In a next round of training, the server may consider, based on the exit reason, whether to consider the first terminal as a training participant.

The server stops the second timer. After obtaining the shared key sent by the first terminal, when receiving a local model sent by another terminal and performing model aggregation, the server may cancel the scrambling item Σ_{*i*<}*ⱼPRG*(*s_{i,j}*) - Σ_{*i*>}*ⱼPRG*(*s_{j,i}*), to obtain an updated global model.

Similarly, for example, three terminals participate in training. A scrambled model of a terminal 1 is *y*₁ = *x*₁ + *PRG*(*B*₁) + *PRG*(*s*_{1,2}) + *PRG*(*s*_{1,3}) *mod p,* a scrambled model of a terminal 2 is *y*₂ = *x*₂ + *PRG*(*B*₂) + *PRG*(*s*_{2,3}) - *PRG*(*s*_{1,2}) *mod p,* and a scrambled model of a terminal 3 is *y*₃ = *x*₃ + *PRG*(*B*₃) - *PRG*(*s*_{1,3}) - *PRG*(*s*_{2,3}) *mod p.* If the terminal 2 goes offline, the server aggregates the scrambled models of the terminal 1 and the terminal 3 to obtain *y*₁ + *y*₃ = *x*₁ + *x*₃ + *PRG*(*B*₁) + *PRG*(*B*₃) + *PRG*(*s*_{1,2}) - *PRG*(*s*_{2,3}) *mod p*. After shared keys *s*_{1,2} and *s*_{2,3} of the terminal 2 that exits are obtained, a perturbation item *PRG* (*s*_{1,2}) *- PRG* (*s*_{2,3}) can be eliminated, and *x*₁ + *x*₃ + *PRG*(*B*₁) + *PRG*(*B*₃) can be further obtained. The server further obtains at least two second sub-keys from the terminal 1 and the terminal 3, eliminates a perturbation item *PRG*(*B*₁) + *PRG*(*B*₃) of the random seed, and finally obtains an updated global model *x*₁ + *x*₃.

### Manner 2 for obtaining the shared key:

S506: The second timer expires.

After the second timer expires, if the server does not receive the local model sent by the first terminal, the server determines that the first terminal exits the current round of training.

S507: The server sends a third obtaining request to the third terminal.

Correspondingly, the third terminal receives the third obtaining request.

The third obtaining request includes an identifier of the first terminal.

For example, the server may send the third obtaining request to one or more second terminals in the at least two second terminals except the first terminal. It is assumed that the shared key *s_{i,j}* is divided into n first sub-keys, and a *DSS* may send the third obtaining request to k third terminals, where n < p'. Herein, p' is a prime number greater than a quantity of terminals that participate in training, and may be the same as or different from p mentioned above. Herein, p' may also be carried in the broadcast message.

S508: The third terminal sends a third feedback message to the server.

Correspondingly, the server receives the third feedback message.

Herein, the third feedback message includes one first sub-key of the shared key *s_{i,j}* and one second sub-key of the random seed *Bᵢ*.

For example, step S505 and steps S506 to step S509 are processes that are alternatively selected to be performed.

S509: The server recovers the shared key *s_{i,j}* based on at least one received first sub-key, and recovers the random seed *Bᵢ* based on at least one received second sub-key.

When the server obtains k or more first sub-keys, the shared key *s_{i,j}* can be recovered. Herein, k < n. Similarly, when the server obtains a specific quantity of second sub-keys, the random seed *Bᵢ* can be recovered.

### Manner 3 for obtaining the shared key (not shown in the figure):

After the second timer expires, if the server does not receive the local model sent by the first terminal, the server sends a second exit notification to the first terminal. The second exit notification is used to indicate the first terminal to exit the current round of training. After receiving the second exit notification, the first terminal sends the shared key to the server. After obtaining the shared key sent by the first terminal, when receiving a local model sent by another terminal and performing model aggregation, the server may cancel the scrambling item Σ_{*i*<}*ⱼPRG(s_{i,j}*) - Σ_{*i*>}*ⱼPRG*(*s_{j,i}*), to obtain an updated global model.

In another embodiment, if *DSCᵢ* of the first terminal is online, a scrambled native model *yᵢ* = *xᵢ* + *PRG*(*Bᵢ*) + Σ_{*i*<}*ⱼPRG*(*s_{i,j}*) *-* Σ_{*i*>}*ⱼPRG*(*s_{j,i}*)*mod p* is sent to a *DSS* of the server, and the *DSS* stops the second timer. The server may eliminate a perturbation item of the shared key based on the at least two first sub-keys. The server may obtain the random seed in the following manners:

### Manner 1 for obtaining the random seed (not shown in the figure):

Before the second timer expires, the server receives the local model sent by the first terminal, and may eliminate the perturbation item of the shared key in the aggregated model based on the at least two obtained first sub-keys. In addition, the server may further send a first obtaining request to at least one third terminal. The first obtaining request is used to request to obtain at least one second sub-key. The at least one third terminal sends a first feedback message to the server. The first feedback message includes at least one second sub-key. The server may recover the random seed based on the at least one obtained second sub-key, and eliminate a perturbation item of the random seed in the aggregated model, to obtain the updated global model in the current round.

### Manner 2 for obtaining the random seed (not shown in the figure):

Before the second timer expires, the server receives the local model sent by the first terminal, and may eliminate the perturbation item of the shared key in the aggregated model based on the at least two obtained first sub-keys. In addition, because the server learns that the first terminal is online, the server may further send a second obtaining request to the first terminal. The second obtaining request is used to request to obtain the random seed. The first terminal sends a second feedback message to the server. The second feedback message includes the random seed. The server may further eliminate the perturbation item of the random seed in the aggregated model based on the random seed, to obtain the updated global model in the current round.

S510: The server aggregates local models, and eliminates a random vector of S_{*i*,j} and a random vector of *Bᵢ*, to obtain a global model.

The three terminals are still used as an example. If the terminal 2 goes offline, the server aggregates the scrambled models of the terminal 1 and the terminal 3 to obtain *y*₁ + *y*₃ *= x*₁ + *x*₃ *+ PRG*(*B*₁) *+ PRG*(*B*₃) *+ PRG(s₁,₂) - PRG (s₂,₃) mod p.* After the shared keys s₁,₂ and _{S2},₃ of the terminal 2 that exits are obtained, the perturbation item *PRG*(*s*_{1,2}) *- PRG*(*s*_{2,3}) can be eliminated. When B₁ and B₃ are obtained, *PRG*(*B*₁) and *PRG*(*B*₃) can be removed. Therefore, *x*₁ + *x*₃ can be finally obtained.

According to the communication method provided in this embodiment of this application, the first terminal divides the shared key into the at least two first sub-keys, divides the random seed into the at least two second sub-keys, and distributes the at least two first sub-keys and the at least two second sub-keys to other training participants. If the first terminal exits training midway, the server may obtain a specific quantity of first sub-keys from other training participants to recover the shared key, and/or obtain a specific quantity of second sub-keys from other training participants to recover the random seed. Further, the server may eliminate the perturbation item of the shared key in the aggregated model based on the recovered shared key, and eliminate the perturbation item of the random seed in the aggregated model based on the recovered random seed, to obtain the updated global model in the current round. Therefore, security in a neural network training process is improved.

In another scenario, if the first terminal exits a *t*^{th} round of training, the server may recover the shared key *s_{i,j} (j* = 1,2, ..., n) of the server. After the *t*^{th} round of training, the following two cases are considered: In a first case, in a (*t'*)^{th} round of training, the first terminal is in an active state, and training participants in the *t*^{th} round are the same as those in the (*t'*)^{th} round. In a second case, the training participants in the *t*^{th} round are a proper subset of the training participants in the (*t'*)^{th} round, and different participants between the two rounds of training all exit in the (*t'*)^{th} round. When the first terminal uploads a scrambled global model after the (*t'*)^{th} round of training ends, model data is leaked on the server (it is assumed that same effective noise is added by the first terminal to the model in two rounds of training).

For example, three terminals participate in training. It is assumed that the participants in both the *t*^{th} round of training and the (*t'*)^{th} round of training are the foregoing three terminals. If the terminal 2 goes offline in the *t*^{th} round, the server aggregates the scrambled models of the terminal 1 and the terminal 3 to obtain *y*₁ + *y*₃ = *x*₁ + *x*₃ + *PRG*(*B*₁) *+ PRG*(*B*₃) *+ PRG*(*s*_{1,2}) *- PRG*(*s*_{2,3}) *mod p*. After shared keys *s*_{1,2} and *s*_{2,3} of the terminal 2 that exits are obtained, a perturbation item *PRG*(*s*_{1,2}) *- PRG*(*s*_{2,3}) can be eliminated. If the terminal is always online in the (*t'*)^{th} round and the native model uploaded by the terminal is set to *y*₂*'* = *x*₂*' + PRG*(*B*₂*'*) *+ PRG*(*s*_{2,3}) *- PRG*(*s*_{1,2}) *mod p*, the server needs to recover a random number ${B}_{2}^{′}$. In this case, because ${y}_{2}^{′}$ is known, PRG (*B*₂*'*) is known, and *PRG*(*s*_{2,3}) - *PRG*(*s*_{1,2}) is known in the *t*^{th} round, a raw model *x*₂*'* of the terminal 2 in the (*t'*)^{th} round is directly exposed.

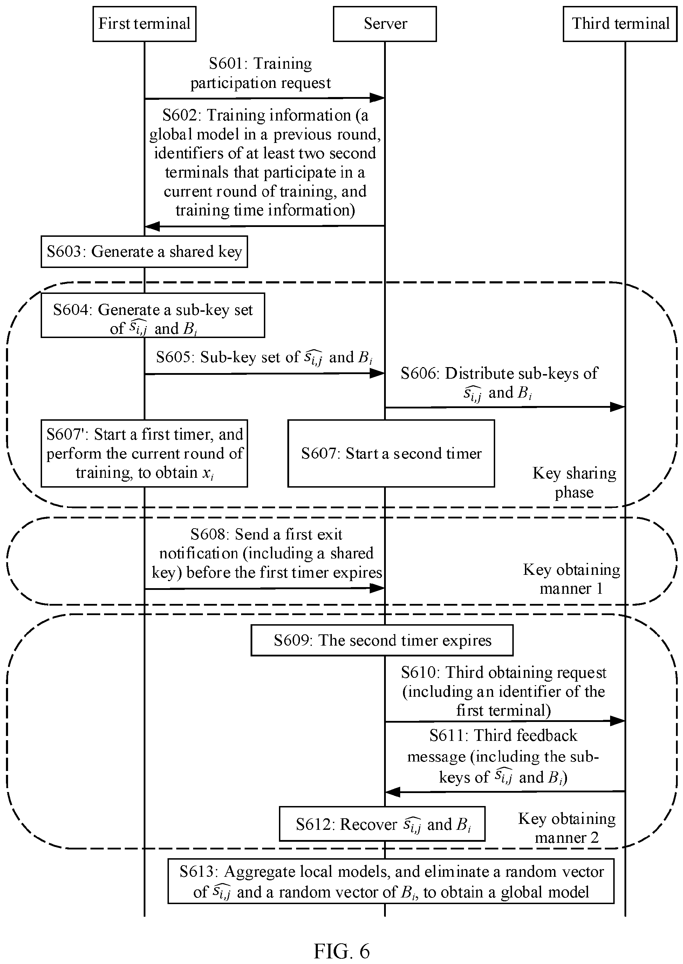

Therefore, as shown in FIG. 6, an embodiment of this application further provides a communication method. The method is applied to an interaction process between a server and at least two second terminals. In this embodiment, an interaction process between the server and a first terminal is used as an example. The first terminal is any one of the at least two second terminals. A difference between this process and the embodiment shown in FIG. 4 lies in a shared-key generating process and a model scrambling and aggregation process. A difference between this process and the embodiment shown in FIG. 5 lies in a shared-key generating process. The following mainly describes the shared-key generating process and the model scrambling and aggregation process. For a registration process, refer to the embodiment shown in FIG. 4. The method may include the following steps.

S601: The first terminal sends a training participation request to the server.

Correspondingly, the server receives the training participation request.

For specific implementation of this step, refer to step S406 in the embodiment shown in FIG. 4. Details are not described herein again.

S602: The server sends training information to the first terminal.

Correspondingly, the first terminal receives the training information.

A difference between this step and step S407 in the embodiment shown in FIG. 4 lies in that the training information further includes training time information. The training time information includes at least one of the following information: a timestamp of the server and a time variable function f(t). Herein, t may be a quantity of training rounds or a variable related to a quantity of training rounds.

S603: The first terminal generates a shared key $\hat{{s}_{i , j}}$.

After receiving the training information, the first terminal generates the shared key $\hat{{s}_{i , j}}$ based on the training time information, a private key of the first terminal, and a public key of a third terminal (*DSCⱼ*).

For example, if the training time information includes the timestamp of the server, the first terminal may calculate f(t) by using a native embedded function, and then use the private key of the first terminal, the public key of the third terminal (*DSCⱼ*), and f(t) as input of a one-way function to calculate the shared key $\hat{{s}_{i , j}}$ (relative to *s_{i,j}*, which may be referred to as a modified shared key).

For example, if the training time information includes a time variable function f(t), the first terminal may use the private key of the first terminal, the public key of the third terminal (*DSCⱼ*), and f(t) as input of the one-way function, to calculate the shared key $\hat{{s}_{i , j}}$. For example, a hash function $\hat{{s}_{i , j}} = hash \left({s}_{i , j}\left‖f\left(t\right)\right.\right)$ may be used to calculate the shared key $\hat{{s}_{i , j}}$.$\hat{{s}_{i , j}}$ calculated by the first terminal can be consistent with that calculated by the third terminal. In this way, it is ensured that a shared key $\hat{{s}_{i , j}}$ in each round remains unchanged in each terminal. However, a shared key $\hat{{s}_{i , j}}$ different in each round can be obtained based on a change of f(t), thereby reducing communication overheads. There is no need to generate a different shared key in each round (that is, the terminal and the server need to exchange public keys), that is, "one key in each time". This brings great overheads to the first terminal (generating a key pair) and the server (forwarding a public key). A mechanism based on the one-way function in this embodiment can achieve effect of "one key in each time", and does not bring about relatively large overheads.

S604: The first terminal *DSCᵢ* divides the shared key $\hat{{s}_{i , j}}$ into at least two first sub-keys, divides a random seed *Bᵢ* into at least two second sub-keys, associates the at least two first sub-keys with the at least two second terminals that participate in a current round of training, and associates the at least two second sub-keys with the at least two second terminals that participate in the current round of training, to generate a sub-key set of $\hat{{s}_{i , j}}$ and *Bᵢ*.

The sub-key set includes a correspondence between the at least two first sub-keys of the shared key and the identifiers of the at least two second terminals, and a correspondence between the at least two second sub-keys of the random seed and the identifiers of the at least two second terminals.

S605: The first terminal *DSCᵢ* sends the sub-key set of $\hat{{s}_{i , j}}$ and *Bᵢ* to the server.

Correspondingly, the server receives the sub-key set.

S606: The server distributes sub-keys of $\hat{{s}_{i , j}}$ and *Bᵢ* to the third terminal, that is, distributes the at least two first sub-keys and the at least two second sub-keys. The third terminal is any one of the at least two second terminals other than the first terminal.

Correspondingly, the third terminal receives one first sub-key and one second sub-key.

S607: The server starts a second timer.

S607': When the server starts the second timer, the first terminal starts a first timer, and performs the current round of training based on a global model in a previous round and a native dataset, to obtain an initial local model *xᵢ*.

The first timer indicates a deadline for uploading the local model by the first terminal. A transmission delay of the first terminal is considered for the second timer. Duration of the second timer is greater than duration of the first timer.

The first terminal performs the current round of training based on the global model in the previous round and the native dataset, to obtain the initial local model *xᵢ*.

In this embodiment, the first terminal exits training before sending the local model. After the server obtains an aggregated model, a scrambling item ${\sum }_{i < j} PRG \left(\hat{{s}_{i , j}}\right) - {\sum }_{i > j} PRG \left(\hat{{s}_{j , i}}\right)$ cannot be canceled by using the aggregated model. Therefore, the server needs to obtain the shared key.

The server may obtain the shared key in the following manners:

### Manner 1 for obtaining the shared key:

S608: The first terminal sends a first exit notification to the server before the first timer expires.

Correspondingly, the server receives the first exit notification.

When the first terminal cannot send the local model, the first terminal actively notifies the server that the first terminal exits training.

The first exit notification includes the shared key.

Further, the first exit notification may further include an exit reason. The exit reason includes high processor usage, insufficient power, and the like of the first terminal. In a next round of training, the server may consider, based on the exit reason, whether to consider the first terminal as a training participant.

The server stops the second timer. After obtaining the shared key sent by the first terminal, when receiving a local model sent by another terminal and performing model aggregation, the server may cancel the scrambling item ${\sum }_{i < j} PRG \left(\hat{{s}_{i , j}}\right) - {\sum }_{i > j} PRG \left(\hat{{s}_{j , i}}\right)$, to obtain an updated global model.

Similarly, for example, three terminals participate in training. A scrambled model of a terminal 1 is ${y}_{1} = {x}_{1} + PRG \left({B}_{1}\right) + PRG \left(\hat{{s}_{1 , 2}}\right) + PRG \left(\hat{{s}_{1 , 3}}\right) mod p$ , a scrambled model of a terminal 2 is ${y}_{2} = {x}_{2} + PRG \left({B}_{2}\right) + PRG \left(\hat{{s}_{2 , 3}}\right) - PRG \left(\hat{{s}_{1 , 2}}\right) mod p$ , and a scrambled model of a terminal 3 is ${y}_{3} = {x}_{3} + PRG \left({B}_{3}\right) - PRG \left(\hat{{s}_{1 , 3}}\right) - PRG \left(\hat{{s}_{2 , 3}}\right) mod p$ . If the terminal 2 goes offline, the server aggregates the scrambled models of the terminal 1 and the terminal 3 to obtain ${y}_{1} + {y}_{3} = {x}_{1} + {x}_{3} + PRG \left({B}_{1}\right) + PRG \left({B}_{3}\right) + PRG \left(\hat{{s}_{1 , 2}}\right) - PRG \left(\hat{{s}_{2 , 3}}\right) mod p$. After shared keys $\hat{{s}_{1 , 2}}$ and $\hat{{s}_{2 , 3}}$ of the terminal 2 that exits are obtained, a perturbation item $PRG \left(\hat{{s}_{1 , 2}}\right) - PRG \left(\hat{{s}_{2 , 3}}\right)$ can be eliminated, and *x*₁ + *x*₃ + *PRG*(*B*₁) + *PRG*(*B*₃) can be further obtained. The server further obtains at least two second sub-keys from the terminal 1 and the terminal 3, eliminates a perturbation item *PRG*(*B*₁) *+ PRG* (*B*₃) of the random seed, and finally obtains an updated global model *x*₁ + *x*₃.

### Manner 2 for obtaining the shared key:

S609: The second timer expires.

After the second timer expires, if the server does not receive the local model sent by the first terminal, the server determines that the first terminal exits the current round of training.

S610: The server sends a third obtaining request to the third terminal.

Correspondingly, the third terminal receives the third obtaining request.

The third obtaining request includes an identifier of the first terminal.

For example, the server may send the third obtaining request to one or more second terminals in the at least two second terminals except the first terminal. It is assumed that the shared key $\hat{{s}_{i , j}}$ is divided into n first sub-keys, and a *DSS* may send the third obtaining request to k third terminals, where n < p. Herein, p is a prime number.

S611: The third terminal sends a third feedback message to the server.

Correspondingly, the server receives the third feedback message.

Herein, the third feedback message includes one first sub-key of the shared key $\hat{{s}_{i , j}}$ and one second sub-key of the random seed *Bᵢ*.

S612: The server recovers the shared key $\hat{{s}_{i , j}}$ based on at least one received first sub-key, and recovers the random seed *Bᵢ* based on at least one received second sub-key.

When the server obtains k or more first sub-keys, the shared key $\hat{{s}_{i , j}}$ can be recovered. Herein, k < n. Similarly, when the server obtains a specific quantity of second sub-keys, the random seed *Bᵢ* can be recovered.

For example, step S608 and steps S609 to step S612 are processes that are alternatively selected to be performed.

### Manner 3 for obtaining the shared key (not shown in the figure):

After the second timer expires, if the server does not receive the local model sent by the first terminal, the server sends a second exit notification to the first terminal. The second exit notification is used to indicate the first terminal to exit the current round of training. After receiving the second exit notification, the first terminal sends the shared key to the server. After obtaining the shared key sent by the first terminal, when receiving a local model sent by another terminal and performing model aggregation, the server may cancel the scrambling item ${\sum }_{i < j} PRG \left(\hat{{s}_{i , j}}\right) - {\sum }_{i > j} PRG \left(\hat{{s}_{j , i}}\right)$, to obtain an updated global model.

In another embodiment, if *DSCᵢ* of the first terminal is online, a scrambled native model ${y}_{i} = {x}_{i} + PRG \left({B}_{i}\right) + {\sum }_{i < j} PRG \left(\hat{{s}_{i , j}}\right) - {\sum }_{i > j} PRG \left(\hat{{s}_{j , i}}\right) mod p$ is sent to a *DSS* of the server, and the *DSS* stops the second timer. The server may eliminate a perturbation item of the shared key based on the at least two first sub-keys. The server may obtain the random seed in the following manners:

### Manner 1 for obtaining the random seed (not shown in the figure):

Before the second timer expires, the server receives the local model sent by the first terminal, and may eliminate the perturbation item of the shared key in the aggregated model based on the at least two obtained first sub-keys. In addition, the server may further send a first obtaining request to at least one third terminal. The first obtaining request is used to request to obtain at least one second sub-key. The at least one third terminal sends a first feedback message to the server. The first feedback message includes at least one second sub-key. The server may recover the random seed based on the at least one obtained second sub-key, and eliminate a perturbation item of the random seed in the aggregated model, to obtain the updated global model in the current round.

### Manner 2 for obtaining the random seed (not shown in the figure):

Before the second timer expires, the server receives the local model sent by the first terminal, and may eliminate the perturbation item of the shared key in the aggregated model based on the at least two obtained first sub-keys. In addition, because the server learns that the first terminal is online, the server may further send a second obtaining request to the first terminal. The second obtaining request is used to request to obtain the random seed. The first terminal sends a second feedback message to the server. The second feedback message includes the random seed. The server may further eliminate the perturbation item of the random seed in the aggregated model based on the random seed, to obtain the updated global model in the current round.

S613: The server aggregates local models, and eliminates a random vector of $\hat{{s}_{i , j}}$ and a random vector of *Bᵢ*, to obtain a global model.

The three terminals are still used as an example. If the terminal 2 goes offline, the server aggregates the scrambled models of the terminal 1 and the terminal 3 to obtain ${y}_{1} + {y}_{3} = {x}_{1} + {x}_{3} + PRG \left({B}_{1}\right) + PRG \left({B}_{3}\right) + PRG \left(\hat{{s}_{1 , 2}}\right) - PRG \left(\hat{{s}_{2 , 3}}\right) mod p$ . After the shared keys $\hat{{s}_{1 , 2}}$ and $\hat{{s}_{2 , 3}}$ of the terminal 2 that exits are obtained, the perturbation item $PRG \left(\hat{{s}_{1 , 2}}\right) - PRG \left(\hat{{s}_{2 , 3}}\right)$ can be eliminated. When *B*₁ and *B*₃ are obtained, *PRG*(*B*₁) *and PRG*(*B*₃) can be removed. Therefore, *x*₁ + *x*₃ can be finally obtained.

According to the communication method provided in this embodiment of this application, the first terminal generates a modified shared key based on the training time information in the training information, the private key of the first terminal, and the public key of the third terminal. Modified shared keys are different in rounds of training. The first terminal divides the modified shared key into at least two first sub-keys, divides the random seed into at least two second sub-keys, and distributes the at least two first sub-keys and the at least two second sub-keys to other training participants. If the first terminal exits training midway, the server may obtain a specific quantity of first sub-keys from other training participants to recover the shared key, and/or obtain a specific quantity of second sub-keys from other training participants to recover the random seed. Further, the server may eliminate the perturbation item of the shared key in the aggregated model based on the recovered shared key, and eliminate the perturbation item of the random seed in the aggregated model based on the recovered random seed, to obtain the updated global model in the current round. Therefore, security in a neural network training process is improved.

The foregoing describes solutions provided in embodiments of this application. It may be understood that, to implement the foregoing functions, the communication apparatus (for example, the first terminal or the server) includes corresponding hardware structures and/or software modules for performing the functions. A person skilled in the art should be easily aware that this application can be implemented in a form of hardware or a combination of hardware and computer software with reference to units and algorithm steps in the examples described in embodiments disclosed in this specification. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method examples. For example, each functional module may be obtained through division based on each function, or two or more functions may be integrated into one processing module. The functional module may be implemented in a form of hardware, or may be implemented in a form of a software functional module. It should be noted that, in embodiments of this application, division into modules is an example and is merely logical function division. During actual implementation, another division manner may be used. The following uses division into functional modules based on corresponding functions as an example for description.

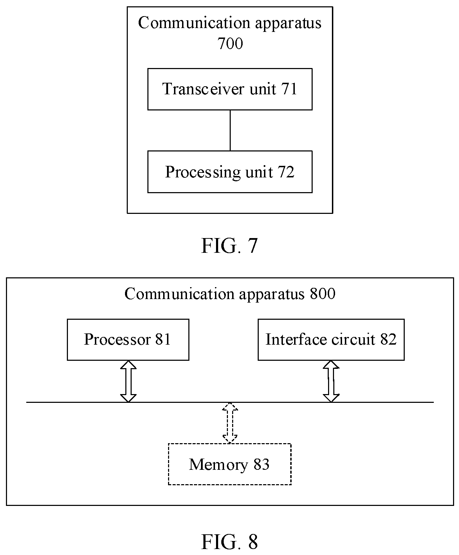

FIG. 7 and FIG. 8 each are a schematic of a structure of a possible communication apparatus according to an embodiment of this application. These communication apparatuses may be configured to implement functions of the first terminal or the server in the foregoing method embodiments, and therefore can also achieve beneficial effects of the foregoing method embodiments. In this embodiment of this application, the communication apparatus may be the server 21 shown in FIG. 2, or may be any one of the plurality of second terminals 22 shown in FIG. 2, or may be a module (for example, a chip) used in the server or the first terminal.

As shown in FIG. 7, the communication apparatus 700 includes a transceiver unit 71 and a processing unit 72. The communication apparatus 700 is configured to implement functions of the first terminal or the server in the method embodiments shown in FIG. 3 to FIG. 6.

When the communication apparatus 700 is configured to implement the functions of the first terminal in the method embodiments shown in FIG. 3 to FIG. 6, the transceiver unit 71 is configured to receive training information. The training information includes a global model in a previous round and identifiers of at least two second terminals that participate in a current round of training. The first terminal is any one of the at least two second terminals. The transceiver unit 71 is further configured to send a local model of the first terminal. The local model is obtained based on the global model in the previous round and a shared key. The shared key is generated based on a private key of the first terminal and a public key of a third terminal. The third terminal is any one of the at least two second terminals other than the first terminal.

Optionally, the processing unit 72 is configured to scramble an initial local model of the first terminal by using a random vector of the shared key, to obtain the local model of the first terminal.

Optionally, the processing unit 72 is further configured to perform modulo division on the local model that is of the first terminal and that is obtained through scrambling.

Optionally, the transceiver unit 71 is further configured to send a sub-key set. The sub-key set includes a correspondence between at least two first sub-keys of the shared key and the identifiers of the at least two second terminals, and a correspondence between at least two second sub-keys of a random seed and the identifiers of the at least two second terminals.

Optionally, the transceiver unit 71 is further configured to send a first exit notification before a first timer expires. The first exit notification includes the shared key.

Optionally, the first exit notification further includes an exit reason.

Optionally, the transceiver unit 71 is further configured to receive a second exit notification after a second timer expires, and the transceiver unit 71 is further configured to send the shared key.

Optionally, the training information further includes training time information. The training time information includes at least one of the following information: a timestamp of a server and a time variable function. The processing unit 72 is further configured to determine a modified first sub-key based on the training time information and a first sub-key of the first terminal. The processing unit 72 is further configured to scramble the local model of the first terminal by using a random vector of the modified first sub-key.

Optionally, the transceiver unit 71 is further configured to receive a broadcast message. The broadcast message includes at least one of the following information: an identifier of a training task, model structure information, a public key of the server, and at least one prime number.

Optionally, the transceiver unit 71 is further configured to send a registration request. The registration request includes at least one of the following information: an identifier of the first terminal and a public key of the first terminal. The transceiver unit 71 is further configured to receive a registration response.

Optionally, the transceiver unit 71 is further configured to send an obtaining request. The obtaining request includes the identifier of the training task. The transceiver unit 71 is further configured to receive a feedback message. The feedback message includes at least one of the following information: the identifier of the training task, the identifiers of the at least two second terminals, and public keys of the at least two second terminals.

Optionally, the transceiver unit 71 is further configured to send a training participation request.

Optionally, the training participation request includes at least one of the following information: processor usage of the first terminal and an electricity quantity of the first terminal.

Optionally, the identifiers of the at least two second terminals that participate in the current round of training include at least one of the following identifiers: identifiers of second terminals that newly participate in the current round of training, and an identifier of a terminal that participates in the previous round of training and that exits the current round of training.

Optionally, the training information further includes at least one of the following information: the first timer and a quantity of training rounds.

When the communication apparatus 700 is configured to implement the functions of the server in the method embodiments shown in FIG. 3 to FIG. 6, the transceiver unit 71 is configured to send training information. The training information includes a global model in a previous round and identifiers of at least two second terminals that participate in a current round of training. The transceiver unit 71 is further configured to receive local models of the at least two second terminals. The local models are obtained based on the global model in the previous round and a shared key between the at least two second terminals. The processing unit 72 is configured to aggregate the local models of the at least two second terminals based on the shared key between the at least two second terminals, to obtain an updated global model in the current round.

Optionally, the local models of the at least two second terminals are obtained by scrambling initial local models of the at least two second terminals by using a random vector of the shared key. The processing unit 72 is configured to: aggregate the local models of the at least two second terminals, and eliminate the random vector of the shared key between the at least two second terminals, to obtain the global model.

Optionally, the transceiver unit 71 is further configured to receive a sub-key set. The sub-key set includes a correspondence between at least two first sub-keys of the shared key and the identifiers of the at least two second terminals, and a correspondence between at least two second sub-keys of a random seed and the identifiers of the at least two second terminals. The transceiver unit 71 is further configured to distribute the at least two first sub-keys and the at least two second sub-keys. The local models of the at least two second terminals are obtained by scrambling the initial local models of the at least two second terminals by using random vectors of the at least two first sub-keys and random vectors of the at least two second sub-keys.

Optionally, the processing unit 72 is further configured to start a first timer. The transceiver unit 71 is further configured to receive a first exit notification from a first terminal before the first timer expires. The first exit notification includes the shared key. The first terminal is any one of the at least two second terminals.

Optionally, the first exit notification further includes an exit reason.

Optionally, the processing unit 72 is further configured to start a second timer. Duration of the second timer is greater than duration of the first timer. The transceiver unit 71 is further configured to send a second exit notification after the second timer expires. The transceiver unit 71 is further configured to receive the shared key from the first terminal.

Optionally, the processing unit 72 is further configured to start a second timer. The transceiver unit 71 is further configured to: if a local model from the first terminal is received before the second timer expires, send a first obtaining request to at least one third terminal, and receive a first feedback message. The first feedback message includes at least one of the second sub-keys. The first terminal is any one of the at least two second terminals. The at least one third terminal is at least of the at least two second terminals other than the first terminal. Alternatively, the transceiver unit 71 is further configured to: if a local model from the first terminal is received before the second timer expires, send a second obtaining request to the first terminal, and receive a second feedback message. The second feedback message includes the random seed. Alternatively, the transceiver unit 71 is further configured to: when the second timer expires, and a local model of the first terminal is not received and a first sub-key of the first terminal is not received, send a third obtaining request to the at least one third terminal, and receive a third feedback message. The third obtaining request includes an identifier of the first terminal. The third feedback message includes at least one of the first sub-keys and at least one of the second sub-keys.

Optionally, the training information further includes training time information. The training time information includes at least one of the following information: a timestamp of the server and a time variable function. The local model of the first terminal is obtained by scrambling an initial local model of the first terminal by using a random vector of a modified first sub-key. The modified first sub-key is obtained based on the training time information and the first sub-key of the first terminal.

Optionally, the transceiver unit 71 is further configured to send a broadcast message. The broadcast message includes at least one of the following information: an identifier of a training task, model structure information, a public key of the server, and at least one prime number.

Optionally, the transceiver unit 71 is further configured to receive a registration request. The registration request includes at least one of the following information: the identifiers of the at least two second terminals and public keys of the at least two second terminals. The server sends a registration response.

Optionally, the transceiver unit 71 is further configured to receive a first obtaining request. The first obtaining request includes the identifier of the training task. The transceiver unit 71 is further configured to send a first feedback message. The first feedback message includes at least one of the following information: the identifier of the training task, the identifiers of the at least two second terminals, and public keys of the at least two second terminals.

Optionally, the transceiver unit 71 is further configured to receive a training participation request.

Optionally, the training participation request includes at least one of the following information: processor usage of the at least two second terminals and electricity quantities of the at least two second terminals.

Optionally, the identifiers of the at least two second terminals that participate in the current round of training include at least one of the following identifiers: the identifiers of the at least two second terminals that newly participate in the current round of training, and an identifier of a terminal that participates in the previous round of training and that exits the current round of training.

Optionally, the training information further includes at least one of the following information: the first timer and a quantity of training rounds.

For more detailed descriptions of the transceiver unit 71 and the processing unit 72, directly refer to related descriptions in the method embodiments shown in FIG. 3 to FIG. 6. Details are not described herein again.

As shown in FIG. 8, the communication apparatus 800 includes a processor 81 and an interface circuit 82. The processor 81 and the interface circuit 82 are coupled to each other. It may be understood that the interface circuit 82 may be a transceiver or an input/output interface. Optionally, the communication apparatus 800 may further include a memory 83, configured to: store instructions executed by the processor 81, store input data required by the processor 81 to run instructions, or store data generated after the processor 81 runs instructions.

When the communication apparatus 800 is configured to implement the method shown in FIG. 3 to FIG. 6, the processor 81 is configured to implement the functions of the processing unit 72, and the interface circuit 82 is configured to implement the functions of the transceiver unit 71.

When the communication apparatus is a chip used in a server, the chip implements the functions of the server in the foregoing method embodiments. The chip receives information from another module (for example, a radio frequency module or an antenna) in the server. The information is sent by a first terminal to the server. Alternatively, the chip in the server sends information to another module (for example, a radio frequency module or an antenna) in the server. The information is sent by the server to the first terminal.

When the communication apparatus is a chip used in the first terminal, the chip implements the functions of the first terminal in the foregoing method embodiments. The chip receives information from another module (for example, a radio frequency module or an antenna) in the first terminal. The information is sent by the server to the first terminal. Alternatively, the chip in the first terminal sends information to another module (for example, a radio frequency module or an antenna) in the first terminal. The information is sent by the first terminal to the server.

It may be understood that the processor in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another logic circuit, a programmable logic device, a transistor logic device, a hardware component, or any combination thereof. The general-purpose processor may be a microprocessor, any conventional processor, or the like.

The method steps in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, and a compact disc read-only memory (compact disc read-only memory, CD-ROM) or any other form of storage medium well known in the art. For example, the storage medium is coupled to the processor, so that the processor can read information from the storage medium and write information into the storage medium. Certainly, the storage medium may be alternatively a component of the processor. The processor and the storage medium may be located in an ASIC. In addition, the ASIC may be located in the first terminal or the server. Certainly, the processor and the storage medium can be discrete components located in the first terminal or the server.

All or some of the foregoing embodiments may be implemented by software, hardware, firmware, or any combination thereof. When the software is used to implement embodiments, all or some of embodiments may be implemented in a form of a computer program product. The computer program product includes one or more computer programs or instructions. When the computer programs or instructions are loaded and executed on a computer, all or any combination thereof. When the software is used to implement embodiments, all or some of embodiments may be implemented in a form of a computer program product. The computer program product includes one or more computer programs or instructions. When the computer programs or instructions are loaded and executed on a computer, all or some of the procedures or functions in embodiments of this application are executed. The computer may be a general-purpose computer, a dedicated computer, a computer network, a terminal, user equipment, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium accessible by a computer, or a data storage device integrating one or more usable media, for example, a server or a data center. The usable medium may be a magnetic medium, for example, a floppy disk, a hard disk, or a magnetic tape; or may be an optical medium, for example, a digital video disc; or may be a semiconductor medium, for example, a solid-state drive.

An embodiment of this application further provides a communication system. The communication system includes at least two second terminals and a server. A first terminal may be any one of the at least two second terminals.

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

In this application, "at least one" indicates one or more, and "a plurality of" indicates two or more. "And/or" describes an association relationship between associated objects, and indicates that three relationships may exist. For example, A and/or B may indicate the following cases: Only A exists, both A and B exist, and only B exists, where A and B may be singular or plural. In the text descriptions of this application, the character "/" usually indicates an "or" relationship between the associated objects. In a formula in this application, the character "/" indicates a "division" relationship between the associated objects. In this application, "first" and "second" are merely examples, and quantities indicated by using "first" and "second" may be one or more. "First" and "second" are merely used to distinguish between objects of a same type. The first object and the second object may be a same object, or may be different objects.

It should be noted that the terms "system" and "network" may be used interchangeably in embodiments of this application. "A plurality of" means two or more. In view of this, in embodiments of this application, "a plurality of" may also be understood as " at least two". "And/or" describes an association relationship between associated objects and indicates that three relationships may exist. For example, A and/or B may indicate the following three cases: Only A exists, both A and B exist, and only B exists. In addition, the character "/" generally indicates an "or" relationship between the associated objects unless otherwise stated.

The scope of protection is defined by the claims.

## Claims

1. A communication method, wherein the method comprises:
receiving (S301), by a first terminal, training information, wherein the training information comprises a global model in a previous round and identifiers of at least two second terminals that participate in a current round of training, and the first terminal is any one of the at least two second terminals; and
sending (S302), by the first terminal, a local model of the first terminal, wherein the local model is obtained based on the global model in the previous round and a shared key, the shared key is generated based on a private key of the first terminal and a public key of a third terminal, and the third terminal is any one of the at least two second terminals other than the first terminal,
wherein before the sending (S302), by the first terminal, a local model of the first terminal, the method further comprises:
scrambling, by the first terminal, an initial local model of the first terminal by using a random vector of the shared key, to obtain the local model of the first terminal, and
**characterized in that**,
after the scrambling an initial local model of the first terminal by using a random vector of the shared key, to obtain the local model of the first terminal, and before the sending, by the first terminal, a local model of the first terminal, the method further comprises:
performing, by the first terminal, modulo division on the local model that is of the first terminal and that is obtained through scrambling.

2. The method according to claim 1, wherein the method further comprises:
sending, by the first terminal, a sub-key set, wherein the sub-key set comprises a correspondence between at least two first sub-keys of the shared key and the identifiers of the at least two second terminals, and a correspondence between at least two second sub-keys of a random seed and the identifiers of the at least two second terminals.

3. The method according to claim 2, wherein the method further comprises:
sending, by the first terminal, a first exit notification before a first timer expires, wherein the first exit notification comprises the shared key.

4. The method according to claim 3, wherein the first exit notification further comprises an exit reason.

5. A communication method, wherein the method comprises:
sending (S301), by a server, training information, wherein the training information comprises a global model in a previous round and identifiers of at least two second terminals that participate in a current round of training;
receiving (S302), by the server, local models of the at least two second terminals, wherein the local models are obtained based on the global model in the previous round and a shared key between the at least two second terminals, wherein the local model are obtained by scrambling an initial local model using a random vector of the shared key and performing modulo division on a scrambled local module that is obtained through the scrambling; and
aggregating (S303), by the server, the local models of the at least two second terminals based on the shared key between the at least two second terminals, to obtain an updated global model in the current round.

6. The method according to claim 5, wherein the local models of the at least two second terminals are obtained by scrambling initial local models of the at least two second terminals by using a random vector of the shared key, and the aggregating, by the server, the local models of the at least two second terminals based on the shared key between the at least two second terminals, to obtain an updated global model in the current round comprises:
aggregating, by the server, the local models of the at least two second terminals, and eliminating the random vector of the shared key between the at least two second terminals, to obtain the global model.

7. The method according to claim 5, wherein the method further comprises:
receiving, by the server, a sub-key set, wherein the sub-key set comprises a correspondence between at least two first sub-keys of the shared key and the identifiers of the at least two second terminals, and a correspondence between at least two second sub-keys of a random seed and the identifiers of the at least two second terminals; and
distributing, by the server, the at least two first sub-keys and the at least two second sub-keys, wherein
the local models of the at least two second terminals are obtained by scrambling the initial local models of the at least two second terminals by using random vectors of the at least two first sub-keys and random vectors of the at least two second sub-keys.

8. The method according to claim 7, wherein the method further comprises:
starting, by the server, a first timer, and
receiving, by the server, a first exit notification from a first terminal before the first timer expires, wherein the first exit notification comprises the shared key, and the first terminal is any one of the at least two second terminals.

9. The method according to claim 8, wherein the first exit notification further comprises an exit reason.

10. A communication apparatus, comprising a unit to implement the method according to any one of claims 1 to 4 or the method according to any one of claims 5 to 9.

11. A computer-readable storage medium, wherein the computer-readable storage medium stores a computer program, and when the program is executed by a processor, the method according to any one of claims 1 to 4 or the method according to any one of claims 5 to 9 is implemented.

## Patentansprüche

1. Kommunikationsverfahren, wobei das Verfahren Folgendes umfasst:
Empfangen (S301), durch ein erstes Endgerät, von Trainingsinformationen, wobei die Trainingsinformationen ein globales Modell in einer vorherigen Runde und Kennungen mindestens zweier zweiter Endgeräte umfassen, die an einer aktuellen Trainingsrunde teilnehmen, und das erste Endgerät ein beliebiges der mindestens zwei zweiten Endgeräte ist; und
Senden (S302), durch das erste Endgerät, eines lokalen Modells des ersten Endgeräts, wobei das lokale Modell basierend auf dem globalen Modell in der vorherigen Runde und einem gemeinsam genutzten Schlüssel erlangt wird, der gemeinsam genutzte Schlüssel basierend auf einem privaten Schlüssel des ersten Endgeräts und einem öffentlichen Schlüssel eines dritten Endgeräts erzeugt wird und das dritte Endgerät ein beliebiges anderes der mindestens zwei Endgeräte als das erste Endgerät ist,
wobei das Verfahren vor dem Senden (S302), durch das erste Endgerät, eines lokalen Modells des ersten Endgeräts ferner Folgendes umfasst:
Verschlüsseln, durch das erste Endgerät, eines anfänglichen lokalen Modells des ersten Endgeräts unter Verwendung eines Zufallsvektors des gemeinsam genutzten Schlüssels, um das lokale Modell des ersten Endgeräts zu erlangen, und
**dadurch gekennzeichnet, dass**
das Verfahren nach dem Verschlüsseln eines anfänglichen lokalen Modells des ersten Endgeräts unter Verwendung eines Zufallsvektors des gemeinsam genutzten Schlüssels, um das lokale Modell des ersten Endgeräts zu erlangen, und vor dem Senden, durch das erste Endgerät, eines lokalen Modells des ersten Endgeräts ferner Folgendes umfasst:
Durchführen, durch das erste Endgerät, einer Modulo-Division an dem lokalen Modell, das dem ersten Endgerät angehört und das über das Verschlüsseln erlangt wird.

2. Verfahren nach Anspruch 1, wobei das Verfahren ferner Folgendes umfasst:
Senden, durch das erste Endgerät, eines Teilschlüsselsatzes, wobei der Teilschlüsselsatz eine Entsprechung zwischen mindestens zwei ersten Teilschlüsseln des gemeinsam genutzten Schlüssels und den Kennungen der mindestens zwei zweiten Endgeräte und eine Entsprechung zwischen mindestens zwei zweiten Teilschlüsseln eines Zufalls-Seed und den Kennungen der mindestens zwei zweiten Endgeräte umfasst.

3. Verfahren nach Anspruch 2, wobei das Verfahren ferner Folgendes umfasst:
Senden, durch das erste Endgerät, einer ersten Austrittsbenachrichtigung, bevor ein erster Timer abläuft, wobei die erste Austrittsbenachrichtigung den gemeinsam genutzten Schlüssel umfasst.

4. Verfahren nach Anspruch 3, wobei die erste Austrittsbenachrichtigung ferner einen Austrittsgrund umfasst.

5. Kommunikationsverfahren, wobei das Verfahren Folgendes umfasst:
Senden (S301), durch einen Server, von Trainingsinformationen, wobei die Trainingsinformationen ein globales Modell in einer vorherigen Runde und Kennungen mindestens zweier zweiter Endgeräte umfassen, die an einer aktuellen Trainingsrunde teilnehmen;
Empfangen (S302), durch den Server, lokaler Modelle der mindestens zwei zweiten Endgeräte, wobei die lokalen Modelle basierend auf dem globalen Modell in der vorherigen Runde und einem gemeinsam genutzten Schlüssel zwischen den mindestens zwei zweiten Endgeräten erlangt werden, wobei die lokalen Modelle durch Verschlüsseln eines anfänglichen lokalen Modells unter Verwendung eines Zufallsvektors des gemeinsam genutzten Schlüssels und Durchführen einer Modulo-Division an einem verschlüsselten lokalen Modul erlangt werden, das über das Verschlüsseln erlangt wird; und
Aggregieren (S303), durch den Server, der lokalen Modelle der mindestens zwei zweiten Endgeräte basierend auf dem gemeinsam genutzten Schlüssel zwischen den mindestens zwei zweiten Endgeräten, um ein aktualisiertes globales Modell in der aktuellen Runde zu erlangen.

6. Verfahren nach Anspruch 5, wobei die lokalen Modelle der mindestens zwei zweiten Endgeräte durch Verschlüsseln anfänglicher lokaler Modelle der mindestens zwei zweiten Endgeräte unter Verwendung eines Zufallsvektors des gemeinsam genutzten Schlüssels erlangt werden und das Aggregieren, durch den Server, der lokalen Modelle der mindestens zwei zweiten Endgeräte basierend auf dem gemeinsam genutzten Schlüssel zwischen den mindestens zwei zweiten Endgeräten, um ein aktualisiertes globales Modell in der aktuellen Runde zu erlangen, Folgendes umfasst:
Aggregieren, durch den Server, der lokalen Modelle der mindestens zwei zweiten Endgeräte und Eliminieren des Zufallsvektors des gemeinsam genutzten Schlüssels zwischen den mindestens zwei zweiten Endgeräten, um das globale Modell zu erlangen.

7. Verfahren nach Anspruch 5, wobei das Verfahren ferner Folgendes umfasst:
Empfangen, durch den Server, eines Teilschlüsselsatzes, wobei der Teilschlüsselsatz eine Entsprechung zwischen mindestens zwei ersten Teilschlüsseln des gemeinsam genutzten Schlüssels und den Kennungen der mindestens zwei zweiten Endgeräte und eine Entsprechung zwischen mindestens zwei zweiten Teilschlüsseln eines Zufalls-Seed und den Kennungen der mindestens zwei zweiten Endgeräte umfasst; und
Verteilen, durch den Server, der mindestens zwei ersten Teilschlüssel und der mindestens zwei zweiten Teilschlüssel, wobei
die lokalen Modelle der mindestens zwei zweiten Endgeräte durch Verschlüsseln der anfänglichen lokalen Modelle der mindestens zwei zweiten Endgeräte unter Verwendung von Zufallsvektoren der mindestens zwei ersten Teilschlüssel und Zufallsvektoren der mindestens zwei zweiten Teilschlüssel erlangt werden.

8. Verfahren nach Anspruch 7, wobei das Verfahren ferner Folgendes umfasst:
Starten, durch den Server, eines ersten Timers; und
Empfangen, durch den Server, einer ersten Austrittsbenachrichtigung von einem ersten Endgerät, bevor der erste Timer abläuft, wobei die erste Austrittsbenachrichtigung den gemeinsam genutzten Schlüssel umfasst und das erste Endgerät ein beliebiges der mindestens zwei zweiten Endgeräte ist.

9. Verfahren nach Anspruch 8, wobei die erste Austrittsbenachrichtigung ferner einen Austrittsgrund umfasst.

10. Kommunikationsvorrichtung, umfassend eine Einheit, um das Verfahren nach einem der Ansprüche 1 bis 4 oder das Verfahren nach einem der Ansprüche 5 bis 9 umzusetzen.

11. Computerlesbares Speichermedium, wobei das computerlesbare Speichermedium ein Computerprogramm speichert und, wenn das Programm durch einen Prozessor ausgeführt wird, das Verfahren nach einem der Ansprüche 1 bis 4 oder das Verfahren nach einem der Ansprüche 5 bis 9 umgesetzt wird.

## Revendications

1. Procédé de communication, dans lequel le procédé comprend :
la réception (S301), par un premier terminal, d'informations d'entraînement, dans lequel les informations d'entraînement comprennent un modèle global d'un cycle précédent et les identifiants d'au moins deux deuxièmes terminaux participant à un cycle d'entraînement actuel, et le premier terminal est l'un quelconque des au moins deux deuxièmes terminaux ; et
l'envoi (S302), par le premier terminal, d'un modèle local du premier terminal, dans lequel le modèle local est obtenu sur la base du modèle global du cycle précédent et d'une clé partagée, la clé partagée est générée sur la base d'une clé privée du premier terminal et d'une clé publique d'un troisième terminal, et le troisième terminal est l'un des au moins deux deuxièmes terminaux autres que le premier terminal,
dans lequel avant l'envoi (S302), par le premier terminal, d'un modèle local du premier terminal, le procédé comprend en outre :
le brouillage, par le premier terminal, d'un modèle local initial du premier terminal à l'aide d'un vecteur aléatoire de la clé partagée, afin d'obtenir le modèle local du premier terminal, et
**caractérisé en ce que**,
après le brouillage d'un modèle local initial du premier terminal à l'aide d'un vecteur aléatoire de la clé partagée, afin d'obtenir le modèle local du premier terminal, et avant l'envoi, par le premier terminal, d'un modèle local du premier terminal, le procédé comprend en outre :
la réalisation, par le premier terminal, d'une division modulo sur le modèle local qui est du premier terminal et qui est obtenu par brouillage.

2. Procédé selon la revendication 1, dans lequel le procédé comprend en outre :
l'envoi, par le premier terminal, d'un ensemble de sous-clés, dans lequel l'ensemble de sous-clés comprend une correspondance entre au moins deux premières sous-clés de la clé partagée et les identifiants des au moins deux deuxièmes terminaux, et une correspondance entre au moins deux deuxièmes sous-clés d'une graine aléatoire et les identifiants des au moins deux deuxièmes terminaux.

3. Procédé selon la revendication 2, dans lequel le procédé comprend en outre :
l'envoi, par le premier terminal, d'une première notification de sortie avant l'expiration d'un premier minuteur, dans lequel la première notification de sortie comprend la clé partagée.

4. Procédé selon la revendication 3, dans lequel la première notification de sortie comprend en outre une raison de sortie.

5. Procédé de communication, dans lequel le procédé comprend :
l'envoi (S301), par un serveur, d'informations d'entraînement, dans lequel les informations d'entraînement comprennent un modèle global d'un cycle précédent et les identifiants d'au moins deux deuxièmes terminaux qui participent à un cycle d'entraînement actuel ;
la réception (S302), par le serveur, des modèles locaux des au moins deux deuxièmes terminaux, dans lequel les modèles locaux sont obtenus sur la base du modèle global du cycle précédent et d'une clé partagée entre les au moins deux deuxièmes terminaux, dans lequel les modèles locaux sont obtenus à l'aide d'un vecteur aléatoire de la clé partagée et la réalisation d'une division modulo sur un module local brouillé obtenu par le brouillage ; et
l'agrégation (S303), par le serveur, des modèles locaux des au moins deux deuxièmes terminaux basés sur la clé partagée entre les au moins deux deuxièmes terminaux, afin d'obtenir un modèle global mis à jour dans le cycle actuel.

6. Procédé selon la revendication 5, dans lequel les modèles locaux des au moins deux deuxièmes terminaux sont obtenus en brouillant les modèles locaux initiaux des au moins deux deuxièmes terminaux à l'aide d'un vecteur aléatoire de la clé partagée, et l'agrégation, par le serveur, des modèles locaux des au moins deux deuxièmes terminaux sur la base de la clé partagée entre les au moins deux deuxièmes terminaux, afin d'obtenir un modèle global mis à jour pour le cycle actuel, comprend :
l'agrégation, par le serveur, des modèles locaux des au moins deux deuxièmes terminaux, et l'élimination du vecteur aléatoire de la clé partagée entre les au moins deux deuxièmes terminaux, afin d'obtenir le modèle global.

7. Procédé selon la revendication 5, dans lequel le procédé comprend en outre :
la réception, par le serveur, d'un ensemble de sous-clés, dans lequel l'ensemble de sous-clés comprend une correspondance entre au moins deux premières sous-clés de la clé partagée et les identifiants des au moins deux deuxièmes terminaux, et une correspondance entre au moins deux secondes sous-clés d'une graine aléatoire et les identifiants des au moins deux deuxièmes terminaux ; et
la distribution, par le serveur, des au moins deux premières sous-clés et des au moins deux secondes sous-clés, dans lequel les modèles locaux des au moins deux deuxièmes terminaux sont obtenus en brouillant les modèles locaux initiaux des au moins deux deuxièmes terminaux à l'aide de vecteurs aléatoires des au moins deux premières sous-clés et de vecteurs aléatoires des au moins deux secondes sous-clés.

8. Procédé selon la revendication 7, dans lequel le procédé comprend en outre :
le déclenchement, par le serveur, d'un premier minuteur ; et
la réception, par le serveur, d'une première notification de sortie à partir d'un premier terminal avant l'expiration du premier minuteur, dans lequel la première notification de sortie comprend la clé partagée, et le premier terminal est l'un quelconque des au moins deux deuxièmes terminaux.

9. Procédé selon la revendication 8, dans lequel la première notification de sortie comprend en outre une raison de sortie.

10. Appareil de communication, comprenant une unité conçue pour mettre en œuvre le procédé selon l'une quelconque des revendications 1 à 4 ou le procédé selon l'une quelconque des revendications 5 à 9.

11. Support de stockage lisible par ordinateur, dans lequel le support de stockage lisible par ordinateur stocke un programme informatique, et lorsque le programme informatique est exécuté par un processeur, le procédé selon l'une quelconque des revendications 1 à 4 ou le procédé selon l'une quelconque des revendications 5 à 9 est mis en œuvre.
